(19) **Europäisches Patentamt**
**European Patent Office**
**Office européen des brevets**

(11) **EP 3 088 712 A2**

(12) **EUROPEAN PATENT APPLICATION**

(43) Date of publication:
**02.11.2016 Bulletin 2016/44**

(21) Application number: **16166965.0**

(22) Date of filing: **26.04.2016**

(51) Int Cl.:
*F02D 41/00* (2006.01)    *F02D 41/14* (2006.01)
*F02D 41/30* (2006.01)    *F02D 41/02* (2006.01)
*F02D 41/34* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.04.2015 JP 2015093496**

(71) Applicant: **Toyota Jidosha Kabushiki Kaisha Toyota-shi, Aichi-ken, 471-8571 (JP)**

(72) Inventors:
• **KAYANUMA, Ryosuke**
**TOYOTA-SHI, AICHI-KEN, 471-8571 (JP)**

• **YAMAGUCHI, Yuji**
**TOYOTA-SHI, AICHI-KEN, 471-8571 (JP)**
• **SUZUKI, Kazuya**
**TOYOTA-SHI, AICHI-KEN, 471-8571 (JP)**
• **MIYOSHI, Yuji**
**TOYOTA-SHI, AICHI-KEN, 471-8571 (JP)**
• **HOSHI, Koichi**
**TOYOTA-SHI, AICHI-KEN, 471-8571 (JP)**

(74) Representative: **Intès, Didier Gérard André et al Cabinet Beau de Loménie**
**158 rue de l'Université**
**75340 Paris Cedex 07 (FR)**

(54) **INTERNAL COMBUSTION ENGINE**

(57)     An internal combustion engine which has a plurality of cylinders comprises port fuel injectors (12), cylinder fuel injectors (11), an exhaust purification catalyst (20) arranged at an engine exhaust passage, a downstream side air-fuel ratio sensor (41), and a control device (31) controlling a combustion air-fuel ratio and a ratio of feed of fuel from two fuel injectors, wherein the control device (31) is configured to be able to perform average air-fuel ratio control where it alternately controls an average air-fuel ratio to a rich air-fuel ratio and a lean air-fuel ratio and inter-cylinder air-fuel ratio control where it controls the combustion air-fuel ratios of the cylinders so that the combustion air-fuel ratios of the cylinders become richer and leaner than the average air-fuel ratio. The control device 31 controls the feed ratio so that an amount of fuel feed from the port fuel injectors (12) becomes greater than an amount of fuel feed from the cylinder fuel injectors (11) for cylinders where the combustion air-fuel ratio is made leaner than the average air-fuel ratio when the inter-cylinder air-fuel ratio control is being performed.

FIG. 1

**Description**

Technical Field

The present invention relates to an internal combustion engine which has a plurality of cylinders and to a method of controlling an internal combustion engine.

Background Art

Known in the past has been an internal combustion engine provided with port fuel injectors injecting fuel into an intake passage communicating with cylinders and cylinder fuel injectors injecting fuel into combustion chambers of the cylinders. JP2007-332867A discloses an internal combustion engine for example having a plurality of cylinders and changing the air-fuel ratio when burning fuel in a cylinder (below, referred to as the "combustion air-fuel ratio") among the cylinders.

In an internal combustion engine changing the combustion air-fuel ratio among cylinders, in part of the cylinders among the plurality of cylinders, the combustion air-fuel ratios are made air-fuel ratios richer than the stoichiometric air-fuel ratio (below, referred to as "rich air-fuel ratios"), while at the remaining cylinders, they are made air-fuel ratios leaner than the stoichiometric air-fuel ratio (below, referred to as "lean air-fuel ratios"). Control changing the combustion air-fuel ratios among cylinders in this way is called "dither control" and is performed for raising the temperature of the exhaust system of the internal combustion engine.

In particular, in the internal combustion engine described in JP2007-332867A, in the cylinders where the combustion air-fuel ratios are made lean air-fuel ratios, fuel is only fed from the port fuel injectors, while in the cylinders where the combustion air-fuel ratios are made rich air-fuel ratios, fuel is fed from both the port fuel injectors and the cylinder fuel injectors. According to this patent literature, it is considered possible to suppress torque fluctuation among cylinders performing dither control.

Summary of Invention

In this regard, the exhaust gas discharged from the combustion chambers contains a sulfur component. Such a sulfur component is under certain conditions adsorbed or stored at the surface of catalyst precious metal carried on a carrier of an exhaust purification catalyst and covers the surface of the catalyst precious metal. As a result, the catalyst precious metal has a decreased activity and a drop in the ability to remove the unburned HC and CO, $NO_x$, etc. in the exhaust gas flowing into the exhaust purification catalyst is implied.

Therefore, the inventors of the present application proposed to alternately control the average value of the combustion air-fuel ratios at all cylinders, defined as the "average air-fuel ratio", between rich air-fuel ratios and lean air-fuel ratios and to control the combustion air-fuel ratios of the cylinders so that the combustion air-fuel ratio becomes a rich air-fuel ratio at least at one cylinder and so that the combustion air-fuel ratios at part of the cylinders become air-fuel ratios leaner than the average air-fuel ratio even when the average air-fuel ratio is controlled to a lean air-fuel ratio. Due to this, it is possible to suppress a drop in activity of the catalyst precious metal due to the sulfur component.

However, when performing such control, in the above-mentioned part of the cylinders, in the state where the average air-fuel ratio becomes a lean air-fuel ratio, the combustion air-fuel ratios become air-fuel ratios leaner than the average air-fuel ratio. For this reason, at this part of the cylinders, the combustion air-fuel ratios become lean air-fuel ratios with high lean degrees and deterioration of the combustion in the combustion chambers is invited.

Therefore, in view of the above problems, an object of the present invention is to provide an internal combustion engine able to suppress a drop in activity of the catalyst precious metal due to a sulfur component while suppressing deterioration of combustion at the cylinders.

To solve the above problem, in a first aspect of the invention, there is provided an internal combustion engine which has a plurality of cylinders comprising port fuel injectors injecting fuel into an intake passage communicating with the cylinders, cylinder fuel injectors injecting fuel into combustion chambers of the cylinders, an exhaust purification catalyst arranged at an engine exhaust passage and able to store oxygen, a downstream side air-fuel ratio sensor arranged at a downstream side of the exhaust purification catalyst in the direction of flow of exhaust, and a control device configured to control combustion air-fuel ratios when fuel is burned in the cylinders and to control a ratio of feed of fuel from both of the port fuel injectors and the cylinder fuel injectors. In the first aspect of the invention, the control device is configured to perform average air-fuel ratio control where it alternately controls an average value of combustion air-fuel ratios of all cylinders, defined as an average air-fuel ratio, to a rich air-fuel ratio richer than a stoichiometric air-fuel ratio and a lean air-fuel ratio leaner than a stoichiometric air-fuel ratio and inter-cylinder air-fuel ratio control where it controls the combustion air-fuel ratios of the cylinders so that even when due to the average air-fuel ratio control, the average air-fuel ratio is controlled to a lean air-fuel ratio, in at least one cylinder among the plurality of cylinders, the combustion air-fuel ratio becomes a rich air-fuel ratio and in at least one cylinder, the combustion air-fuel ratio becomes leaner than the average air-fuel ratio and is configured to control the average air-fuel in the average air-fuel ratio control so that a lean shift amount of a difference between the average air-fuel ratio when controlling the average air-fuel ratio to a lean air-fuel ratio and a stoichiometric air-fuel ratio becomes smaller than a rich shift amount of a difference of the average air-fuel ratio when controlling the average air-fuel ratio to a rich air-fuel ratio and a stoichiometric air-fuel ratio and so that an amount of fuel feed from the port fuel injector becomes greater than an amount of fuel feed from the cylinder fuel injector for a cylinder where the combustion air-fuel ratio is made leaner than the average air-fuel ratio when the inter-cylinder air-fuel ratio control is being performed.

In a second aspect of the invention, there is provided the first aspect of the invention wherein the control device is further configured so as to control the feed ratio when the inter-cylinder air-fuel ratio control is being performed so that an amount of fuel feed from a cylinder fuel injector becomes greater than an amount of fuel feed from a port fuel injector for a cylinder where the combustion air-fuel ratio is made richer than the average air-fuel ratio.

In a third aspect of the invention, there is provided the first aspect of the invention wherein the control device is further configured so as to control the feed ratio when the inter-cylinder air-fuel ratio control is being performed so that an amount of fuel feed from a port fuel injector becomes greater than an amount of fuel feed from a cylinder fuel injector for a cylinder where the combustion air-fuel ratio is made richer than the average air-fuel ratio.

In a fourth aspect of the invention, there is provided any one of the first to third aspects wherein the control device is further configured so as to control the feed ratio when the inter-cylinder air-fuel ratio control is being performed so that a ratio of amount of fuel feed from a port fuel injector to a total amount of injection at a cylinder where the combustion air-fuel ratio is made leaner than the average air-fuel ratio becomes that ratio or more at a cylinder where the combustion air-fuel ratio is made richer than the average air-fuel ratio.

In a fifth aspect of the invention, there is provided any one of the first to fourth aspects wherein the control device is further configured so as to control the feed ratio when the inter-cylinder air-fuel ratio control is being performed so as to not to feed fuel from a cylinder fuel injector but to feed fuel from only a port fuel injector for a cylinder where the combustion air-fuel ratio is made leaner than the average air-fuel ratio.

In a sixth aspect of the invention, there is provided any one of the first to fifth aspects wherein the control device is configured to control the feed ratio so that the higher the engine load and the higher the engine speed, the greater the amount of feed of fuel from a cylinder fuel injector with respect to the total amount of injection of each cylinder.

According to the present invention, there is provided an internal combustion engine able to suppress a drop in activity of the catalyst precious metal due to a sulfur component while suppressing deterioration of combustion at the cylinders. The invention further relates to a method of controlling an internal combustion engine which has a plurality of cylinders, the internal combustion engine comprising:

port fuel injectors injecting fuel into an intake passage communicating with the cylinders;
cylinder fuel injectors injecting fuel into combustion chambers of the cylinders;
an exhaust purification catalyst arranged at an engine exhaust passage and able to store oxygen.

In the method combustion air-fuel ratios are controlled when fuel is burned in the cylinders, and a ratio of feed of fuel from both of the port fuel injectors and the cylinder fuel injectors is controlled. The method comprises the steps of: performing average air-fuel ratio control where it is alternately controlled an average value of combustion air-fuel ratios of all cylinders, defined as an average air-fuel ratio, to a rich air-fuel ratio richer than a stoichiometric air-fuel ratio and a lean air-fuel ratio leaner than a stoichiometric air-fuel ratio; performing inter-cylinder air-fuel ratio control where it is controlled the combustion air-fuel ratios of the cylinders so that even when due to the average air-fuel ratio control, the average air-fuel ratio is controlled to a lean air-fuel ratio, in at least one cylinder among the plurality of cylinders, the combustion air-fuel ratio becomes a rich air-fuel ratio and in at least one cylinder, the combustion air-fuel ratio becomes leaner than the average air-fuel ratio; controlling the average air-fuel in the average air-fuel ratio control so that a lean shift amount of a difference between the average air-fuel ratio when controlling the average air-fuel ratio to a lean air-fuel ratio and a stoichiometric air-fuel ratio becomes smaller than a rich shift amount of a difference of the average air-fuel ratio when controlling the average air-fuel ratio to a rich air-fuel ratio and a stoichiometric air-fuel ratio; and controlling the feed ratio so that an amount of fuel feed from the port fuel injector becomes greater than an amount of fuel feed from the cylinder fuel injector for a cylinder where the combustion air-fuel ratio is made leaner than the average air-fuel ratio when the inter-cylinder air-fuel ratio control is being performed.

The feed ratio may be controlled when the inter-cylinder air-fuel ratio control is being performed so that an amount of fuel feed from a cylinder fuel injector becomes greater than an amount of fuel feed from a port fuel injector for a cylinder where the combustion air-fuel ratio is made richer than the average air-fuel ratio. The feed ratio may be alternatively or additionally controlled when the inter-cylinder air-fuel ratio control is being performed so that an amount of fuel feed from a port fuel injector becomes greater than an amount of fuel feed from a cylinder fuel injector for a cylinder where the combustion air-fuel ratio is made richer than the average air-fuel ratio.

The feed ratio may further be controlled when the inter-cylinder air-fuel ratio control is being performed so that a ratio of amount of fuel feed from a port fuel injector to a total amount of injection at a cylinder where the combustion air-fuel ratio is made leaner than the average air-fuel ratio becomes that ratio or more at a cylinder where the combustion air-fuel ratio is made richer than the average air-fuel ratio.

The feed ratio may further be controlled when the inter-cylinder air-fuel ratio control is being performed so as to not to feed fuel from a cylinder fuel injector but to feed fuel from only a port fuel injector for a cylinder where the combustion air-fuel ratio is made leaner than the average air-fuel ratio.

The feed ratio may further be controlled so that the higher the engine load and the higher the engine speed, the greater the amount of feed of fuel from a cylinder fuel injector with respect to the total amount of injection of each cylinder.

Brief Description of Drawings

[FIG. 1] FIG. 1 is a view schematically showing an internal combustion engine in which a control device of the present invention is used.
[FIG. 2] FIG. 2 is a view showing a relationship between a sensor applied voltage and output current at different exhaust air-fuel ratios.
[FIG. 3] FIG. 3 is a view showing a relationship between an exhaust air-fuel ratio and output current when making the voltage applied to the sensor constant.
[FIG. 4] FIG. 4 is a time chart of the average air-fuel ratio correction amount etc. in the case of performing air-fuel ratio control by an internal combustion engine according to the present embodiment.
[FIG. 5] FIG. 5 is a time chart of air-fuel ratio correction amounts and combustion air-fuel ratios.
[FIG. 6A] FIG. 6A is a view schematically showing a carrier surface of an exhaust purification catalyst.
[FIG. 6B] FIG. 6B is a view schematically showing a carrier surface of an exhaust purification catalyst.
[FIG. 6C] FIG. 6C is a view schematically showing a carrier surface of an exhaust purification catalyst.
[FIG. 7A] FIG. 7A is a view showing a relationship between a distance from a front end face of an upstream side exhaust purification catalyst and an amount of storage of $SO_x$ per unit volume.
[FIG. 7B] FIG. 7B is a view showing a relationship between a distance from a front end face of an upstream side exhaust purification catalyst and an amount of storage of $SO_x$ per unit volume.
[FIG. 8] FIG. 8 is a functional block diagram of a control device.
[FIG. 9] FIG. 9 is a flow chart showing a control routine of processing for calculating an air-fuel ratio correction amount in a first embodiment.
[FIG. 10] FIG. 10 is a time chart of a temperature of an upstream side exhaust purification catalyst etc.
[FIG. 11] FIG. 11 is a view showing an example of a map representing PFI ratios when inter-cylinder air-fuel ratio control is not being performed.
[FIG. 12] FIG. 12 is a view showing an example of a map representing PFI ratios at lean side cylinders when inter-cylinder air-fuel ratio control is being performed.
[FIG. 13] FIG. 13 is a view showing an example of a map representing PFI ratios at rich side cylinders when inter-cylinder air-fuel ratio control is being performed.
[FIG. 14] FIG. 14 is a view showing an example of a map representing timings of fuel feed from cylinder fuel injectors at rich side cylinders when inter-cylinder air-fuel ratio control is being performed.
[FIG. 15] FIG. 15 is a time chart of an average air-fuel ratio correction amount etc. when inter-cylinder air-fuel ratio control is started.
[FIG. 16] FIG. 16 is a flow chart showing a control routine of processing for setting PFI ratios in the cylinders.
[FIG. 17] FIG. 17 is a time chart, similar to FIG. 15, of an average air-fuel ratio correction amount etc. when inter-cylinder air-fuel ratio control is started.
[FIG. 18] FIG. 18 is a flow chart showing a control routine of processing for setting PFI ratios at cylinders in a second embodiment.
[FIG. 19] FIG. 19 is a time chart, similar to FIG. 4, of an average air-fuel ratio correction amount AFCav etc.
[FIG. 20] FIG. 20 is a functional block diagram similar to FIG. 8.
[FIG. 21] FIG. 21 is a flow chart showing a control routine of processing for calculating an air-fuel ratio correction amount in a second embodiment.

Description of Embodiments

Below, the drawings will be referred to so as explain embodiments of the present invention in detail. Note that in the following explanation, similar component elements are assigned the same reference notations.

(First Embodiment)

<Overall Explanation of Internal Combustion Engine>

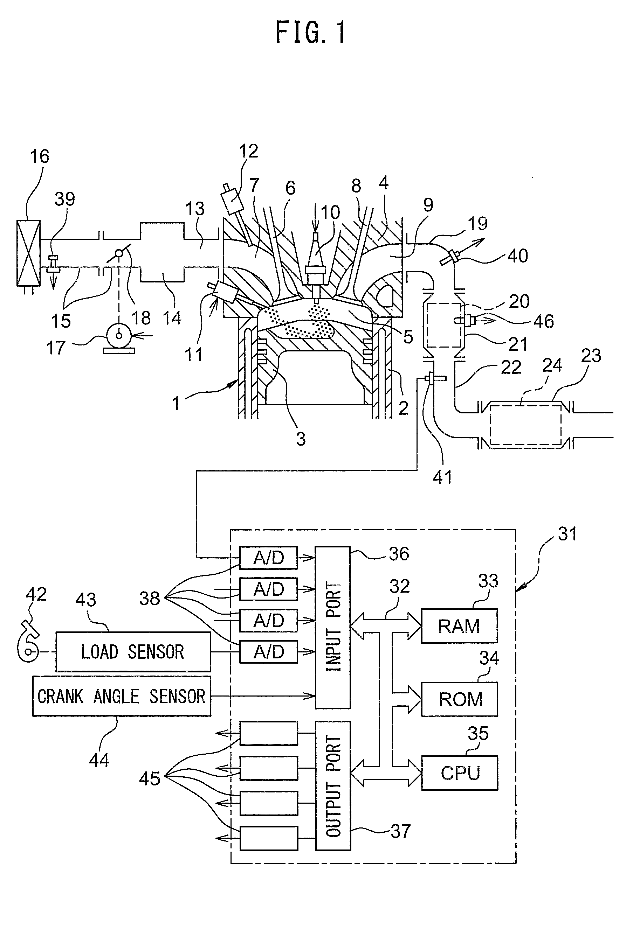

FIG. 1 is a view schematically showing an internal combustion engine of the present invention. In FIG. 1, 1 is an engine body, 2 a cylinder block, 3 a piston reciprocating inside the cylinder block 2, 4 a cylinder head fixed on the cylinder block 2, 5 a combustion chamber formed between the piston 3 and cylinder head 4, 6 an intake valve, 7 an exhaust valve, and 9 an exhaust port. The intake valve 6 opens and closes the intake port 7, while the exhaust valve 8 opens and closes the exhaust port 9. The internal combustion engine in the present embodiment is an in-line 4-cylinder internal combustion engine. Therefore, the engine body 1 has four combustion chambers 5. However, the invention can also be applied to any internal combustion engine which has a plurality of cylinders such as a 6-cylinder internal combustion engine or V-type internal combustion engine or other type of internal combustion engine.

As shown in FIG. 1, at the center part of the inside wall surface of the cylinder head 4, a spark plug 10 is arranged. At a peripheral part of the inside wall surface of the cylinder head 4, a cylinder fuel injector 11 is arranged for directly injecting and feeding fuel inside the cylinder. In addition, around the intake port 7 at the cylinder head 4, a port fuel injector 12 is arranged for injecting and feeding fuel into the intake port 7 (that is, inside the intake passage). The spark plug 10 is configured to generate a spark in accordance with an ignition signal. Further, the fuel injectors 11 and 12 inject the desired amounts of fuel into the combustion chamber 5 in accordance with injection signals. Note that, in the present embodiment, as the fuel, gasoline with a stoichiometric air-fuel ratio of 14.6 is used. However, the internal combustion engine in the present embodiment may also use another fuel.

The intake ports 7 of the cylinders are respectively connected through corresponding intake runners 13 to a surge tank 14. The surge tank 14 is connected through an intake pipe 15 to an air cleaner 16. The intake ports 7, intake runners 13, surge tank 14, and intake pipe 15 form the intake passage. Further, inside the intake pipe 15, a throttle valve 18 driven by a throttle valve-driving actuator 17 is arranged. The throttle valve 18 is made to turn by the throttle valve-driving actuator 17 to thereby change the opening area of the intake passage.

On the other hand, the exhaust ports 9 of the cylinders are connected with an exhaust manifold 19. The exhaust manifold 19 has a plurality of runners connected to the exhaust ports 9 and a header at which these runners merge. The header of the exhaust manifold 19 is connected to an upstream side casing 21 in which the upstream side exhaust purification catalyst 20 is housed. The upstream side casing 21 is connected through the exhaust pipe 22 to a downstream side casing 23 housing the downstream side exhaust purification catalyst 24. The exhaust port 9, exhaust manifold 19, upstream side casing 21, exhaust pipe 22, and downstream side casing 23 form the exhaust passage.

An electronic control unit (ECU) 31 is comprised of a digital computer provided with components connected with each other through a bidirectional bus 32 such as a RAM (random access memory) 33, ROM (read only memory) 34, CPU (microprocessor) 35, input port 36, and output port 37. In the intake pipe 15, an air flowmeter 39 is arranged for detecting the amount of flow of air flowing through the inside of the intake pipe 15. The output of this air flowmeter 39 is input through the corresponding AD converter 38 to the input port 36. Further, at the header of the exhaust manifold 19, an upstream side air-fuel ratio sensor 40 is arranged for detecting the air-fuel ratio of the exhaust gas flowing through the inside of the exhaust manifold 19 (that is, the exhaust gas flowing into the upstream side exhaust purification catalyst 20). In addition, inside the exhaust pipe 22, a downstream side air-fuel ratio sensor 41 is arranged for detecting the air-fuel ratio of the exhaust gas flowing through the inside of the exhaust pipe 22 (that is, exhaust gas flowing out from upstream side exhaust purification catalyst 20 and flowing into downstream side exhaust purification catalyst 24). The outputs of these air-fuel ratio sensors 40 and 41 are also input through corresponding AD converters 38 to the input port 36. Furthermore, at the upstream side exhaust purification catalyst 20, a temperature sensor 46 is arranged for detecting the temperature of the upstream side exhaust purification catalyst 20. The output of this temperature sensor 46 is also input through a corresponding AD converter 38 to the input port 36.

Further, at the accelerator pedal 42, a load sensor 43 for generating an output voltage proportional to the amount of depression of the accelerator pedal 42 is connected. The output voltage of the load sensor 43 is input through a corresponding AD converter 38 to the input port 36. A crank angle sensor 44, for example, generates an output pulse every time a crankshaft rotates by 15 degrees. This output pulse is input to the input port 36. At the CPU 35, the engine speed is calculated from the output pulses of this crank angle sensor 44. On the other hand, the output port 37 is connected through a corresponding drive circuit 45 to the spark plugs 10, the fuel injectors 11 and 12, and the throttle valve-drive actuators 17. Note that, the ECU 31 functions as a control device controlling the internal combustion engine and exhaust purification system.

Note that, the internal combustion engine according to the present embodiment is a non-supercharged internal combustion engine fueled by gasoline, but the configuration of the internal combustion engine according to the present invention is not limited to the above configuration. For example, the internal combustion engine according to the present invention may differ from the above internal combustion engine in the cylinder array, fuel injection modes, configuration of the intake and exhaust systems, configuration of the valve drive mechanisms, presence of superchargers and supercharging modes, etc.

<Explanation of Exhaust Purification Catalyst>

The upstream side exhaust purification catalyst 20 and the downstream side exhaust purification catalyst 24 both have similar configurations. The exhaust purification catalysts 20 and 24 are three-way catalysts having oxygen storage abilities. Specifically, the exhaust purification catalysts 20 and 24 are three-way catalysts comprised of carriers made of ceramic on which precious metals having catalytic actions (for example, platinum (Pt)) and substances having oxygen storage abilities (for example, ceria ($CeO_2$), below, also referred to as "oxygen storing substances") are carried. The three-way catalysts have the functions of simultaneously removing unburned HC and CO and $NO_X$ if the air-fuel ratios of the exhaust gas flowing into the three-way catalysts are maintained at the stoichiometric air-fuel ratio. In addition, since the three-way catalysts have oxygen storage abilities, even if the air-fuel ratios of the exhaust gas flowing into the exhaust purification catalysts 20 and 24 deviates slightly to the rich side or lean side from the stoichiometric air-fuel ratio, the unburned HC and CO and $NO_X$ are simultaneously removed.

That is, since such three-way catalysts have oxygen storage abilities, when the air-fuel ratios of the exhaust gas flowing into the exhaust purification catalysts 20 and 24 become air-fuel ratios leaner than the stoichiometric air-fuel ratio (below, simply referred to as "lean air-fuel ratios"), the excess oxygen contained in the exhaust gas is stored. Due to this, the surfaces of the exhaust purification catalysts 20 and 24 are maintained at the stoichiometric air-fuel ratio, and the surfaces of the exhaust purification catalysts 20 and 24 are simultaneously cleaned of unburned HC and CO and $NO_X$. At this time, the air-fuel ratios of the exhaust gas discharged from the exhaust purification catalysts 20 and 24 become the stoichiometric air-fuel ratio. However, in a three-way catalyst, if the oxygen storage amount reaches the maximum value of the storable amount of oxygen, that is, the "maximum storable oxygen amount Cmax", no further oxygen can be stored. Therefore, if, in the state where the oxygen storage amounts of the three-way catalysts reach substantially the maximum storable oxygen amount Cmax, the air-fuel ratios of the exhaust gas flowing into the exhaust purification catalysts 20 and 24 become lean air-fuel ratios, at the exhaust purification catalysts 20 and 24, soon it becomes impossible to maintain the surfaces at the stoichiometric air-fuel ratio. For this reason, in this case, the air-fuel ratios of the exhaust gas discharged from the exhaust purification catalysts 20 and 24 become lean air-fuel ratios.

On the other hand, in such three-way catalysts, when the air-fuel ratios of the exhaust gas flowing into the exhaust purification catalysts 20 and 24 become air-fuel ratios richer than the stoichiometric air-fuel ratio (below, simply referred to as "rich air-fuel ratios"), the oxygen deficient for reducing the unburned HC and CO contained in the exhaust gas is released from the exhaust purification catalysts 20 and 24. In this case as well, the surfaces of the exhaust purification catalysts 20 and 24 are maintained at the stoichiometric air-fuel ratio, so the unburned HC and CO and $NO_X$ are simultaneously removed at the surfaces of the exhaust purification catalysts 20 and 24. At this time, the air-fuel ratios of the exhaust gas discharged from the exhaust purification catalysts 20 and 24 become the stoichiometric air-fuel ratio. However, in a three-way catalyst, if the oxygen storage amount reaches zero, no further oxygen can be released. Therefore, if the air-fuel ratios of the exhaust gas flowing into the exhaust purification catalysts 20 and 24 in the state where the oxygen storage amounts of the three-way catalysts reach substantially zero become rich air-fuel ratios, at the exhaust purification catalysts 20 and 24, soon it becomes impossible to maintain their surfaces at the stoichiometric air-fuel ratio. For this reason, in this case, the air-fuel ratios of the exhaust gas discharged from the exhaust purification catalysts 20 and 24 become rich air-fuel ratios.

In the above way, according to the exhaust purification catalysts 20 and 24 used in the present embodiment, the characteristics of removal of unburned HC and CO and $NO_X$ in the exhaust gas change according to the air-fuel ratios of the exhaust gas flowing into the exhaust purification catalysts 20 and 24 and oxygen storage amounts.

<Output Characteristics of Air-Fuel Ratio Sensor>

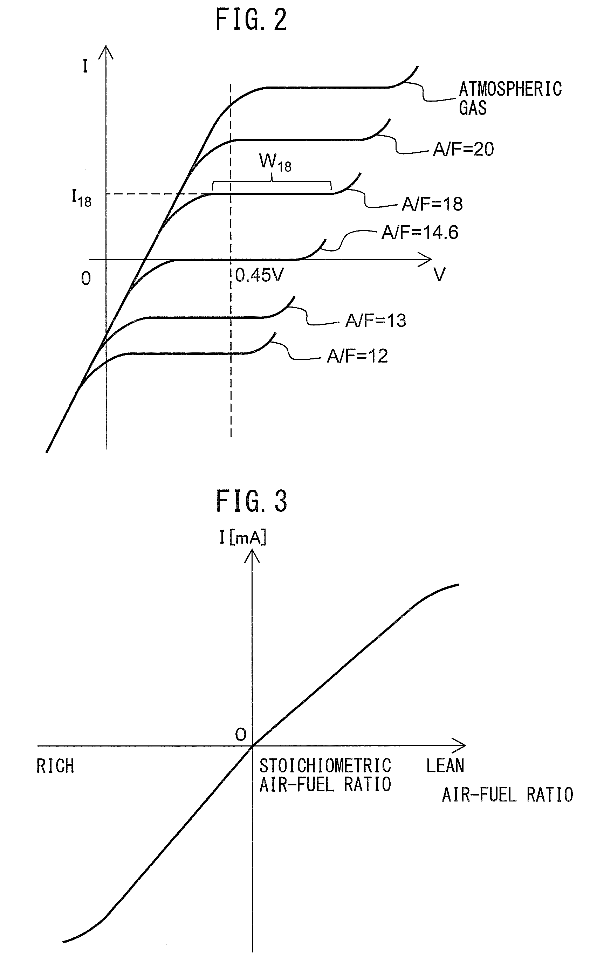

Next, referring to FIG. 2 and FIG. 3, the output characteristics of the air-fuel ratio sensors 40 and 41 in the present embodiment will be explained. FIG. 2 is a view showing the voltage-current (V-I) characteristics of the air-fuel ratio sensors 40 and 41 in the present embodiment, while FIG. 3 is a view showing the relationship of the air-fuel ratio of the exhaust gas flowing through the air-fuel ratio sensors 40 and 41 when maintaining the applied voltage constant (below, referred to as the "exhaust air-fuel ratio") and the output current I. Note that, in the present embodiment, for the two air-fuel ratio sensors 40 and 41, the same configurations of air-fuel ratio sensors are used.

As will be understood from FIG. 2, in the air-fuel ratio sensors 40 and 41 of the present embodiment, the output current I becomes larger the higher the exhaust air-fuel ratio (the leaner). Further, at the lines V-I at the different exhaust air-fuel ratios, there are regions substantially parallel to the V-axis, that is, regions where even if the sensor applied voltages change, the output currents do not change much at all. These voltage regions are called "limit current regions". The currents at this time are called "limit currents". In FIG. 2, the limit current region and limit current when the exhaust air-fuel ratio is 18 are respectively shown by $W_{18}$ and $I_{18}$. Therefore, the air-fuel ratio sensors 40 and 41 can be said to be "limit current type air-fuel ratio sensors".

FIG. 3 is a view showing the relationship between the exhaust air-fuel ratio and output current I when making the applied voltage constant at 0.45V or so. As will be understood from FIG. 3, the output current is linearly (proportionally) changed with respect to the exhaust air-fuel ratio so that, at the air-fuel ratio sensors 40 and 41, the higher the exhaust air-fuel ratio (that is, the leaner), the larger the output current I from the air-fuel ratio sensors 40 and 41. In addition, the air-fuel ratio sensors 40 and 41 are configured so that the output currents I become zero when the exhaust air-fuel ratio is the stoichiometric air-fuel ratio.

Note that, in the above example, as the air-fuel ratio sensors 40 and 41, limit current type air-fuel ratio sensors were used. However, so long as the output currents linearly change with respect to the exhaust air-fuel ratio, as the air-fuel ratio sensors 40 and 41, air-fuel ratio sensors not of the limit current type or any other air-fuel ratio sensors may be used. Further, the two air-fuel ratio sensors 40 and 41 may be air-fuel ratio sensors of structures different from each other. In addition, as the downstream side air-fuel ratio sensor 41, a sensor not of the type where the output current linearly changes with respect to the exhaust air-fuel ratio may be used. Specifically, as the downstream side air-fuel ratio sensor 41, for example, an oxygen sensor with an output value which changes greatly near the stoichiometric air-fuel ratio etc. may be used.

<Summary of Air-Fuel Ratio Control>

Next, a summary of the air-fuel ratio control in an internal combustion engine of the present embodiment will be explained. In the present embodiment, the output air-fuel ratio of the upstream side air-fuel ratio sensor 40 is used as the basis to make the output air-fuel ratio of the upstream side air-fuel ratio sensor 40 match the target air-fuel ratio by controlling the amounts of fuel fed from the fuel injectors 11 and 12 to the cylinders as feedback control. Note that, the "output air-fuel ratio" means an air-fuel ratio corresponding to the output value of the air-fuel ratio sensor.

Here, as explained later, in the present embodiment, sometimes the amounts of fuel fed from the fuel injectors 11 and 12 to the cylinders are made different amounts among the cylinders. In this case, the output air-fuel ratio of the upstream side air-fuel ratio sensor 40 fluctuates somewhat during 1 cycle. In such a case as well, in the present embodiment, the average value of the output air-fuel ratio of the upstream side air-fuel ratio sensor 40 (below, referred to as the "average output air-fuel ratio") is made to match the average value of the different target air-fuel ratios among the cylinders, that is, the "target average air-fuel ratio", by controlling the amounts of fuel fed from the fuel injectors 11 and 12.

In addition, in the air-fuel ratio control of the present embodiment, average air-fuel ratio control and inter-cylinder air-fuel ratio control (dither control) are performed. The average air-fuel ratio control is control using the output air-fuel ratio of the downstream side air-fuel ratio sensor 41 as the basis to set the target average air-fuel ratio. Therefore, average air-fuel ratio control can be said to control the average value of the air-fuel ratios of the air-fuel mixtures when burned at the different cylinders (below, referred to as the "combustion air-fuel ratios", corresponding to air-fuel mixtures of air-fuel mixture fed to the cylinders) at all cylinders (value obtained by dividing the total of the combustion air-fuel ratios of the cylinders in one cycle by the number of the cylinders), that is, the average combustion air-fuel ratio. In other words, it can be said to control the average exhaust air-fuel ratio of the exhaust gas flowing into the upstream side exhaust purification catalyst 20. On the other hand, inter-cylinder air-fuel ratio control is control setting different target air-fuel ratios for the cylinders. In other words, it controls the combustion air-fuel ratios at the different cylinders.

<Average Air-Fuel Ratio Control>

First, the average air-fuel ratio control will be explained. At the average air-fuel ratio control, first, if, in the state where the target average air-fuel ratio is set to the later explained rich set air-fuel ratio, it is judged that the output air-fuel ratio of the downstream side air-fuel ratio sensor 41 has become the rich air-fuel ratio, the target average air-fuel ratio is switched to the lean set air-fuel ratio. Due to this, the average combustion air-fuel ratio and average exhaust air-fuel ratio (below, these together being called the "average air-fuel ratio") change to the lean set air-fuel ratio. Here, in the present embodiment, when the output air-fuel ratio of the downstream side air-fuel ratio sensor 41 becomes a rich judged air-fuel ratio slightly richer than the stoichiometric air-fuel ratio (for example, 14.55) or less, it is judged that the output air-fuel ratio of the downstream side air-fuel ratio sensor 41 has become the rich air-fuel ratio. Therefore, at the average air-fuel ratio control, when controlling the average air-fuel ratio to the rich air-fuel ratio, the average air-fuel ratio is switched to the lean air-fuel ratio when the output air-fuel ratio of the downstream side air-fuel ratio sensor 41 becomes the rich judged air-fuel ratio or less. Further, the lean set air-fuel ratio is a predetermined air-fuel ratio slightly leaner than the stoichiometric air-fuel ratio (air-fuel ratio becoming control center), for example, is made 14.7 or so.

On the other hand, in average air-fuel ratio control, if, in the state where the target average air-fuel ratio is set to the lean set air-fuel ratio, it is judged that the output air-fuel ratio of the downstream side air-fuel ratio sensor 41 has become the lean air-fuel ratio, the target average air-fuel ratio is switched to the rich set air-fuel ratio. Due to this, the average air-fuel ratio changes to the rich set air-fuel ratio. Here, in the present embodiment, when the output air-fuel ratio of the downstream side air-fuel ratio sensor 41 becomes at least a lean judged air-fuel ratio (for example, 14.65) slightly leaner than the stoichiometric air-fuel ratio, it is judged that the output air-fuel ratio of the downstream side air-fuel ratio sensor 41 has become the lean air-fuel ratio. Therefore, in average air-fuel ratio control, when controlling the average air-fuel ratio to the lean air-fuel ratio and the output air-fuel ratio of the downstream side air-fuel ratio sensor 41 becomes the lean judged air-fuel ratio or more, the average air-fuel ratio is switched to the rich air-fuel ratio. Further, the rich set air-fuel ratio is a predetermined air-fuel ratio a certain extent richer than the stoichiometric air-fuel ratio (air-fuel ratio becoming control center), for example, is made 14.4 or so. Note that, the difference between the lean set air-fuel ratio and the stoichiometric air-fuel ratio (below, also referred to as the "lean shift amount") is also smaller than the difference between the rich set air-fuel ratio and the stoichiometric air-fuel ratio (below, also referred as the "rich shift amount").

As a result, in average air-fuel ratio control, the target average air-fuel ratio is alternately set to the rich air-fuel ratio and the lean air-fuel ratio. Due to this, the average air-fuel ratio of the exhaust gas flowing into the upstream side exhaust purification catalyst 20 is alternately controlled to the rich air-fuel ratio and the lean air-fuel ratio.

Note that, rich judged air-fuel ratio and lean judged air-fuel ratio are made air-fuel ratios within 1% of the stoichiometric air-fuel ratio, preferably within 0.5%, more preferably within 0.35%. Therefore, the differences of the rich judged air-fuel ratio and lean judged air-fuel ratio from the stoichiometric air-fuel ratio is, when the stoichiometric air-fuel ratio is 14.6, made 0.15 or less, preferably 0.073 or less, more preferably 0.051 or less. Further, the set air-fuel ratio at the target average air-fuel ratio (for example, rich set air-fuel ratio or lean set air-fuel ratio) is set so that the difference from the stoichiometric air-fuel ratio becomes greater than the above-mentioned difference.

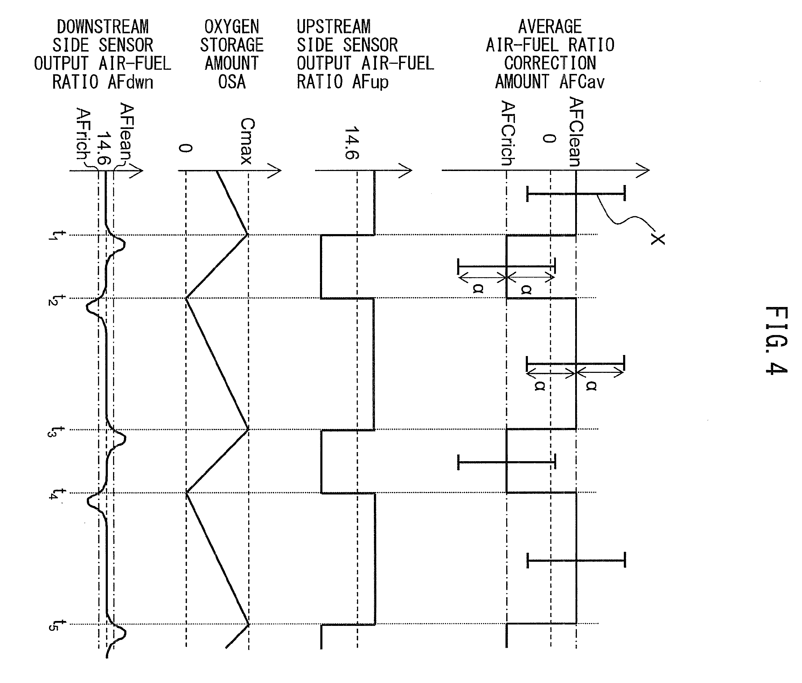

Referring to FIG. 4, the average air-fuel ratio control will be specifically explained. FIG. 4 is a time chart of parameters in the case of performing air-fuel ratio control in the internal combustion engine of the present embodiment such as the average air-fuel ratio correction amount AFCav, output air-fuel ratio AFup of the upstream side air-fuel ratio sensor 40, oxygen storage amount OSA of the upstream side exhaust purification catalyst 20, and output air-fuel ratio AFdwn of the downstream side air-fuel ratio sensor 41.

Note that, average air-fuel ratio correction amount AFCav is a correction amount corresponding to the target average air-fuel ratio of the exhaust gas flowing into the upstream side exhaust purification catalyst 20. When the average air-fuel ratio correction amount AFCav is 0, it means the target average air-fuel ratio is an air-fuel ratio equal to the air-fuel ratio becoming the control center (below, called the "control center air-fuel ratio") (in the present embodiment, basically the stoichiometric air-fuel ratio). Further, when the average air-fuel ratio correction amount AFCav is a positive value, it means that the target average air-fuel ratio is an air-fuel ratio leaner than the control center air-fuel ratio (in the present embodiment, a lean air-fuel ratio). Further, the absolute value of the average air-fuel ratio correction amount AFCav at this time corresponds to the difference between the target average air-fuel ratio and the control center air-fuel ratio or the difference between the average air-fuel ratio and the control center air-fuel ratio, that is, the "lean shift amount". Note that, the "control center air-fuel ratio" means an air-fuel ratio to which an average air-fuel ratio correction amount AFCav is added corresponding to the engine operating state, that is, an air-fuel ratio serving as the reference when making the target average air-fuel ratio fluctuate corresponding to the average air-fuel ratio correction amount AFCav.

Similarly, when the average air-fuel ratio correction amount AFCav is a negative value, it means that the target average air-fuel ratio is an air-fuel ratio richer than the control center air-fuel ratio (in the present embodiment, the rich air-fuel ratio). Further, the absolute value of the average air-fuel ratio correction amount AFCav at this time corresponds to the difference between the target average air-fuel ratio and the control center air-fuel ratio or the difference between the average air-fuel ratio and the control center air-fuel ratio, that is, the "rich shift amount".

In the example shown in FIG. 4, in the state before the time $t_1$, the average air-fuel ratio correction amount AFCav is set to the lean set correction amount AFClean (corresponding to lean set air-fuel ratio). That is, the target average air-fuel ratio is made the lean air-fuel ratio. Along with this, the output air-fuel ratio AFup of the upstream side air-fuel ratio sensor 40, that is, the air-fuel ratio of the exhaust gas flowing into the upstream side exhaust purification catalyst 20, becomes a lean air-fuel ratio. The excess oxygen contained in the exhaust gas flowing into the upstream side exhaust purification catalyst 20 is stored in the upstream side exhaust purification catalyst 20. Along with this, the oxygen storage amount OSA of the upstream side exhaust purification catalyst 20 gradually increases. On the other hand, by the upstream side exhaust purification catalyst 20 storing the oxygen, the exhaust gas flowing out from the upstream side exhaust purification catalyst 20 does not contain oxygen, so the output air-fuel ratio AFdwn of the downstream side air-fuel ratio sensor 41 becomes substantially the stoichiometric air-fuel ratio.

If the oxygen storage amount OSA of the upstream side exhaust purification catalyst 20 gradually increases, finally the oxygen storage amount OSA approaches the maximum storable oxygen amount Cmax. Along with this, part of the oxygen flowing into the upstream side exhaust purification catalyst 20 starts to flow out without being stored at the upstream side exhaust purification catalyst 20. Due to this, the output air-fuel ratio AFdwn of the downstream side air-fuel ratio sensor 41 gradually rises and, at the time $t_1$, reaches the lean judged air-fuel ratio AFlean.

In the present embodiment, if the output air-fuel ratio AFdwn of the downstream side air-fuel ratio sensor 41 becomes the lean judged air-fuel ratio AFlean or more, the oxygen storage amount OSA is made to decrease by the average air-fuel ratio correction amount AFCav being switched to the rich set correction amount AFCrich (corresponding to rich set air-fuel ratio). Therefore, the target average air-fuel ratio is switched to the rich air-fuel ratio.

Note that, in the present embodiment, the output air-fuel ratio AFdwn of the downstream side air-fuel ratio sensor 41 does not immediately change from the stoichiometric air-fuel ratio to the rich air-fuel ratio. The average air-fuel ratio correction amount AFCav is switched after it reaches the rich judged air-fuel ratio AFrich. This is because even if the oxygen storage amount OSA of the upstream side exhaust purification catalyst 20 is sufficient, sometimes the air-fuel ratio of the exhaust gas flowing out from the upstream side exhaust purification catalyst 20 ends up deviating very slightly from the stoichiometric air-fuel ratio. Conversely speaking, the rich judged air-fuel ratio is made an air-fuel ratio which the air-fuel ratio of the exhaust gas flowing out from the upstream side exhaust purification catalyst 20 will normally never reach when the oxygen storage amount OSA of the upstream side exhaust purification catalyst 20 is sufficient. Note that, the same can be said for the above-mentioned lean judged air-fuel ratio.

If, at the time $t_1$, switching the target average air-fuel ratio to the rich air-fuel ratio, along with this, the output air-fuel ratio AFup of the upstream side air-fuel ratio sensor 40, that is, the average air-fuel ratio, changes to the rich air-fuel ratio. The excess unburned HC and CO contained in the exhaust gas flowing into the upstream side exhaust purification catalyst 20 are removed by the upstream side exhaust purification catalyst 20. Along with this, the oxygen storage amount OSA of the upstream side exhaust purification catalyst 20 is gradually decreased. On the other hand, in the upstream side exhaust purification catalyst 20, the unburned HC and CO are removed, so the exhaust gas flowing out from the upstream side exhaust purification catalyst 20 does not contain unburned HC and CO, therefore the output air-fuel ratio AFdwn of the downstream side air-fuel ratio sensor 41 becomes substantially the stoichiometric air-fuel ratio.

If the oxygen storage amount OSA of the upstream side exhaust purification catalyst 20 gradually decreases, finally the oxygen storage amount OSA approaches zero. Along with this, part of the unburned HC and CO flowing into the upstream side exhaust purification catalyst 20 starts to flow out without being removed at the upstream side exhaust purification catalyst 20. Due to this, the output air-fuel ratio AFdwn of the downstream side air-fuel ratio sensor 41 gradually falls and, at the time $t_2$, reaches the rich judged air-fuel ratio AFrich.

In the present embodiment, if the output air-fuel ratio AFdwn of the downstream side air-fuel ratio sensor 41 becomes the rich judged air-fuel ratio AFrich or less, the oxygen storage amount OSA is made to increase by switching the average air-fuel ratio correction amount AFCav to the lean set correction amount AFClean. Therefore, the target air-fuel ratio is switched to a lean air-fuel ratio. After that, at the time $t_3$ on, an operation similar to the above-mentioned operation is repeated.

Further, in the average air-fuel ratio control of the present embodiment, the absolute value of the lean set correction amount AFClean is made a value smaller than the absolute value of the rich set correction amount AFCrich. Therefore, the difference between the average air-fuel ratio when controlling the average air-fuel ratio to the lean air-fuel ratio and the control center air-fuel ratio (stoichiometric air-fuel ratio), that is, the "lean shift amount", is made smaller than the difference between the average air-fuel ratio when controlling the average air-fuel ratio to the rich air-fuel ratio and the control center air-fuel ratio, that is, the "rich shift amount". Due to this, the time period during which the target average air-fuel ratio is set to the lean set correction amount AFClean (for example, the time $t_2$ to $t_3$) becomes longer than the time period during which the target air-fuel ratio is set to the rich set correction amount AFCrich (for example, the time $t_1$ to $t_2$).

<Inter-cylinder Air-Fuel Ratio Control>

Next, inter-cylinder air-fuel ratio control will be explained. In inter-cylinder air-fuel ratio control, the amounts of fuel fed to the cylinders from the fuel injectors 11 and 12 are controlled so that the combustion air-fuel ratios become different air-fuel ratios at least partially among the cylinders. In particular, in the present embodiment, at part of the cylinders, the combustion air-fuel ratios are made richer than the target average air-fuel ratio, while at the remaining cylinders, the combustion air-fuel ratios are made leaner than the target air-fuel ratio.

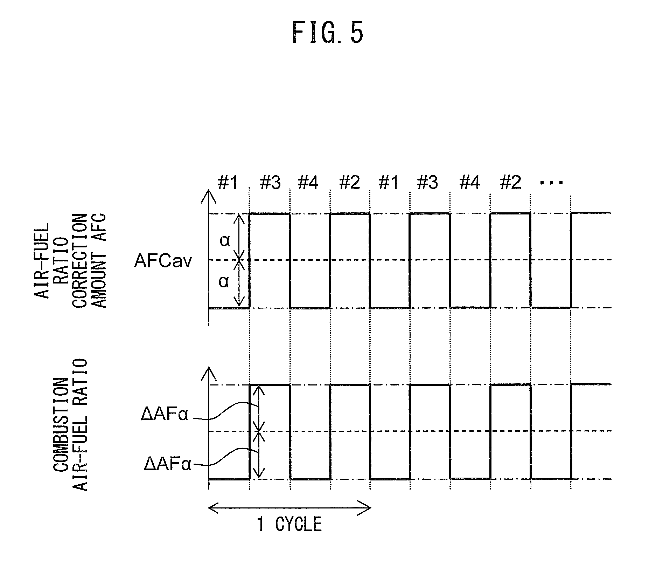

FIG. 5 is a time chart of the air-fuel ratio correction amounts AFC and combustion air-fuel ratios of the cylinders. In the present embodiment, the internal combustion engine is an in-line 4-cylinder internal combustion engine, so the air-fuel mixtures in the combustion chambers 5 are burned in the order of the #1 cylinder, #3 cylinder, #4 cylinder, and #2 cylinder. In the example shown in FIG. 5, at the #1 cylinder in which the mixture is first burned in one cycle, the air-fuel ratio correction amount AFC of this cylinder is decreased by the average air-fuel ratio correction amount AFCav. That is, in the #1 cylinder, the air-fuel ratio of the air-fuel mixture fed to the combustion chamber 5 is made richer than the average target air-fuel ratio. Therefore, in the #1 cylinder, the combustion air-fuel ratio becomes an air-fuel ratio richer than the average air-fuel ratio.

Further, at the #3 cylinder at which the mixture is next burned, the air-fuel ratio correction amount AFC of the cylinder is increased from the average air-fuel ratio correction amount AFCav. As a result, at the #3 cylinder, the combustion air-fuel ratio is made an air-fuel ratio leaner than the average air-fuel ratio. Further, at the #4 cylinder where the mixture is next burned, the combustion air-fuel ratio is made an air-fuel ratio richer than the average air-fuel ratio, while at the #2 cylinder where the mixture is next burned, the combustion air-fuel ratio is made an air-fuel ratio leaner than the average air-fuel ratio.

Further, in the present embodiment, the amount of change from the average air-fuel ratio correction amount AFCav at the inter-cylinder air-fuel ratio control is made the same among the cylinders made richer than the average air-fuel ratio (in the figure, the #1 and #4 cylinders, below, also referred to as the "rich side cylinders"). In the example shown in FIG. 5, the amounts of change of the air-fuel ratio correction amounts at the #1 cylinder and #4 cylinder are all $\alpha$. As a result, the combustion air-fuel ratios at these cylinders are made air-fuel ratios richer from the average air-fuel ratio by exactly $\Delta AF\alpha$ (corresponding to amount of change $\alpha$). Similarly, in the present embodiment, the amount of change from the average air-fuel ratio correction amount AFCav at the inter-cylinder air-fuel ratio control is made the same among the cylinders made leaner than the average air-fuel ratio (in the figure, the #2 cylinder and the #3 cylinder, below, also referred to as the "lean side cylinders"). In the example shown in FIG. 5, the amounts of change of the air-fuel ratio correction amounts at the #2 cylinder and the #3 cylinder are all $\alpha$. As a result, the combustion air-fuel ratios at these cylinders are made air-fuel ratios leaner than the average air-fuel ratio by exactly $\Delta AF\alpha$ (corresponding to amount of change $\alpha$).

Furthermore, in the present embodiment, even between the rich side cylinders and the lean side cylinders, the amounts of change from the average air-fuel ratio correction amount AFCav are made the same at $\alpha$. As a result, the differences between the combustion air-fuel ratios of the cylinders made richer than the average air-fuel ratio and the average air-fuel ratio become equal to the differences between the combustion air-fuel ratios of the cylinders made leaner than the average air-fuel ratio and the average air-fuel ratio.

In FIG. 4, X expresses the amount of change of a combustion air-fuel ratio from the average air-fuel ratio correction amount AFCav in inter-cylinder air-fuel ratio control. As will be understood from FIG. 4, at the times $t_1$ to $t_2$ where the average air-fuel ratio correction amount AFCav is set to the rich set correction amount AFCrich, at the rich side cylinders (#1 cylinder and #4 cylinder), the air-fuel ratio correction amounts AFC of the cylinders become the rich set correction amount AFCrich minus the amount of change $\alpha$ (AFCrich-$\alpha$). As a result, at the rich side cylinders, the combustion air-fuel ratios are made air-fuel ratios richer than the average air-fuel ratio by exactly $\Delta AF\alpha$ (corresponding to amount of change $\alpha$). Further, at the times $t_1$ to $t_2$, at the lean side cylinders, the air-fuel ratio correction amounts AFC of the cylinders become the rich set correction amount AFCrich plus the amount of change $\alpha$ (AFCrich+$\alpha$). As a result, at the lean side cylinders, the combustion air-fuel ratios are made air-fuel ratios leaner than the average air-fuel ratio by exactly $\Delta AF\alpha$ (corresponding to amount of change $\alpha$). In addition, the amount of change $\alpha$ is made a value larger than the absolute value of the rich set correction amount AFCrich. For this reason, at the lean side cylinders, the combustion air-fuel ratios are controlled so that the combustion air-fuel ratios become lean air-fuel ratios.

Similarly, at the times $t_2$ to $t_3$ where the average air-fuel ratio correction amount AFCav is set to the lean set correction amount AFClean, at the lean side cylinders (#2 cylinder and #3 cylinder ), the air-fuel ratio correction amounts AFC of the cylinders become the lean set correction amount AFClean plus the amount of change $\alpha$ (AFClean+$\alpha$). As a result, at the lean side cylinders, the combustion air-fuel ratios are made air-fuel ratios leaner than the average air-fuel ratio by exactly $\Delta AF\alpha$ (corresponding to amount of change $\alpha$). Further, at the times $t_2$ to $t_3$, at the rich side cylinders, the air-fuel ratio correction amounts AFC of the cylinders become the lean set correction amount AFClean minus the amount of change $\alpha$ (AFClean-$\alpha$). As a result, at the rich side cylinders, the combustion air-fuel ratios are made air-fuel ratios richer than the average air-fuel ratio by exactly $\Delta AF\alpha$ (corresponding to amount of change $\alpha$). In addition, the amount of change $\alpha$ is made a value larger than the absolute value of the lean set correction amount AFClean. For this reason, at the rich side cylinders, the combustion air-fuel ratios are controlled so that the combustion air-fuel ratios become rich air-fuel ratios.

Note that, the amount of change $\alpha$ is larger than the absolute values of the rich set correction amount AFCrich and lean set correction amount AFClean. For this reason, at the inter-cylinder air-fuel ratio control, the differences between the combustion air-fuel ratios of the cylinders made richer than the average air-fuel ratio and the combustion air-fuel ratios of the cylinders made leaner than the average air-fuel ratio (that is, the amplitude in inter-cylinder air-fuel ratio control) are larger than the differences between the rich set air-fuel ratio and the lean set air-fuel ratio at the average air-fuel ratio control (that is, the amplitude of the air-fuel ratio in average air-fuel ratio control).

<Effects of Average Air-Fuel Ratio Control and Inter-cylinder Air-Fuel Ratio Control>

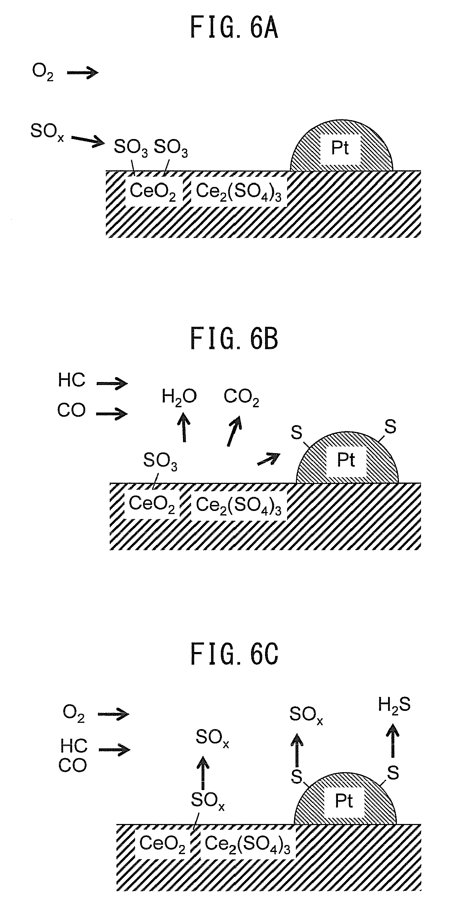

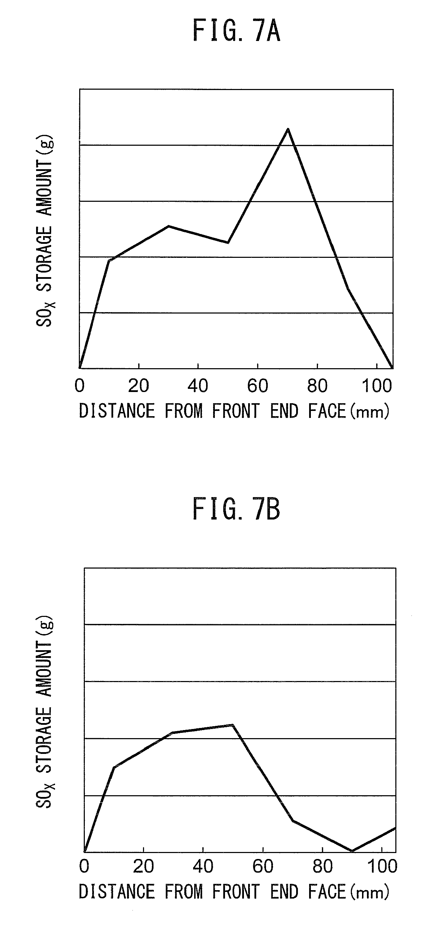

Next, referring to FIG. 6A to FIG. 6C and FIG. 7A and FIG. 7B, the effects of the average air-fuel ratio control and inter-cylinder air-fuel ratio control will be explained. First, referring to FIG. 6A to FIG. 6C, the effects of performing the above-mentioned such average air-fuel ratio control will be explained. FIG. 6A to FIG. 6C are views schematically expressing the carrier surfaces of the exhaust purification catalysts 20 and 24. In the example shown from FIG. 6A to FIG. 6C, the carriers of the exhaust purification catalysts 20 and 24 carry platinum (Pt) as the precious metal having a catalytic action and ceria ($CeO_2$) as the substance having an oxygen storage ability.

In this regard, the fuel fed to an internal combustion engine contains a sulfur component, though slight, so the exhaust gas discharged from the combustion chambers 5 contains a slight amount of sulfur oxides ($SO_X$). When the temperatures of the exhaust purification catalysts 20 and 24 are not that high (for example, 600°C or less), if the $SO_X$ contained in the exhaust gas flows into the exhaust purification catalysts 20 and 24, even if the air-fuel ratio of the exhaust gas is substantially the stoichiometric air-fuel ratio, the $SO_X$ is physically adsorbed on the ceria on the carriers by van der Waals force. However, the $SO_X$ contained in exhaust gas is strongly stored by the ceria on the carriers if the air-fuel ratio of the exhaust gas is a lean air-fuel ratio.

FIG. 6A shows the state where when the temperatures of the exhaust purification catalysts 20 and 24 are not that high (for example, 600°C or less), lean air-fuel ratio exhaust gas flows into the exhaust purification catalysts 20 and 24. Therefore, in the state shown in FIG. 6A, the exhaust gas flowing into the exhaust purification catalysts 20 and 24 contains a large amount of excess oxygen. If in this way the exhaust gas flowing into the exhaust purification catalysts 20 and 24 contains excess oxygen, the $SO_X$ contained in the exhaust gas is chemically adsorbed as $SO_3$ on the ceria. According to such chemical adsorption, the $SO_X$ is strongly adsorbed on the ceria by the above-mentioned physical adsorption. Further, if the excess oxygen contained in the exhaust gas becomes further greater, that is, if the lean degree of the air-fuel ratio of the exhaust gas becomes larger, the $SO_x$ contained in the exhaust gas reacts with the ceria to become $Ce_2(SO_4)_3$. According to such absorption, $SO_X$ is strongly adsorbed at the ceria by the above-mentioned chemical adsorption. Note that, in the following explanation, $SO_X$ being "adsorbed" on and being "absorbed" by the ceria will together be expressed by $SO_X$ being "stored" on the ceria.

If in such a state rich air-fuel ratio exhaust gas flows into the exhaust purification catalysts 20 and 24, the sulfur component of the $SO_X$ stored at the ceria migrates to the platinum. This state is shown in FIG. 6B. As shown in FIG. 6B, if rich air-fuel ratio exhaust gas flows into the exhaust purification catalysts 20 and 24, the exhaust gas contains large amounts of excess unburned HC and CO. For this reason, these unburned HC and CO cause the $SO_X$ stored at the ceria to break down and form water ($H_2O$) and carbon dioxide ($CO_2$). In addition, the sulfur component formed by the breakdown of the $SO_X$ is adsorbed on the surface of the platinum. If, in this way, the sulfur component adsorbed on the surface of the platinum increases and covers the surface of the platinum, the area by which the platinum contacts the surrounding gas decreases and a drop in the catalytic activity of the platinum is invited.

Note that, the sulfur stored at the ceria becomes harder to break down the stronger the storage of the $SO_X$ at the ceria. Therefore, compared with when $SO_X$ is chemically adsorbed on the ceria, the sulfur stored at the ceria becomes higher to break down when the $SO_x$ is absorbed at the ceria as $Ce_2(SO_4)_3$ and accordingly migration of the sulfur component from the ceria to the platinum becomes harder. For this reason, migration of the sulfur component when the $SO_X$ is absorbed by the ceria, compared with when the $SO_X$ is chemically adsorbed on the ceria, does not occur unless the rich degree of the air-fuel ratio of the exhaust gas becomes large or unless the temperatures of the exhaust purification catalysts 20 and 24 become high.

In the state where the sulfur component is adsorbed on the surfaces of the platinum in this way, the exhaust purification catalysts 20 and 24 become high in temperature (for example, 720°C or more). If rich air-fuel ratio exhaust gas flows into the exhaust purification catalysts 20 and 24, the sulfur component stored on the surfaces of the platinum is made to disassociate. This state is shown in FIG. 6C. As shown in FIG. 6C, if rich air-fuel ratio exhaust gas flows into the exhaust purification catalysts 20 and 24, the inflowing exhaust gas contains large amounts of excess unburned HC and CO. Further, even if the air-fuel ratio of the exhaust gas is the rich air-fuel ratio, the exhaust gas contains oxygen, though slight. For this reason, if the exhaust purification catalysts 20 and 24 are high in temperature, the sulfur component adsorbed on the platinum surfaces reacts with the unburned HC and CO and oxygen in the exhaust gas to become $SO_X$ and $H_2S$ and are made to disassociate from the platinum surfaces. Note that, at this time, the $SO_X$ stored at the ceria is also made to disassociate without being adsorbed on the platinum surfaces.

Here, during operation of the internal combustion engine, the temperatures of the exhaust purification catalysts 20 and 24 are not constantly maintained at high temperatures (for example, 720°C or more), but are sometimes maintained at a certain degree of low temperature (for example, less than 720°C) depending on the engine operating state. If in this way the exhaust purification catalysts 20 and 24 are maintained at a certain extent of low temperature, if the air-fuel ratios of the exhaust gas flowing into the exhaust purification catalysts 20 and 24 become rich air-fuel ratios, as shown in FIG. 6B, the sulfur component migrates from the ceria to the platinum surfaces and ends up inviting a drop in the catalytic activity of the platinum.

As opposed to this, in the internal combustion engine of the present embodiment, in average air-fuel ratio control, a lean shift amount is made smaller than a rich shift amount. Due to this, the time period during which the average air-fuel ratio is lean becomes longer than the time period during which the average air-fuel ratio is rich. In this way, in the present embodiment, the time period during which the average exhaust air-fuel ratio of the exhaust gas flowing into the upstream side exhaust purification catalyst 20 is lean becomes longer or the time period during which the average exhaust air-fuel ratio is rich becomes shorter. For this reason, it becomes harder for the sulfur component to travel from the ceria to the platinum surface and therefore becomes possible to suppress a drop in the catalytic activity of the platinum.

Note that, from the viewpoint of making the time period during which the average exhaust air-fuel ratio is lean and making the time period during which the average exhaust air-fuel ratio is rich shorter, it is preferable that the lean shift amount be as small as possible and the rich shift amount be as large as possible. That is, the difference between the lean shift amount and the rich shift amount is preferably made as large as possible.

Next, referring to FIG. 7A and FIG. 7B, the advantageous effects of performing inter-cylinder air-fuel ratio control will be explained. FIG. 7A and FIG. 7B respectively show relationships between the distance from the upstream side end face (front end face) of the upstream side exhaust purification catalyst in the direction of flow of exhaust and the amount of storage of the $SO_X$ at the precious metal and carrier per unit volume of the exhaust purification catalyst. They show the experimental results when using fuel with a high sulfur component concentration to operate an internal combustion engine for a certain time period.

FIG. 7A shows the results in the case of maintaining the average exhaust air-fuel ratio of the exhaust gas flowing into the upstream side exhaust purification catalyst at a lean air-fuel ratio and not performing the above-mentioned inter-cylinder air-fuel ratio control. Therefore, FIG. 7A shows the results in the case where the combustion air-fuel ratio is maintained at the lean air-fuel ratio at all of the cylinders. As will be understood from FIG. 7A, when not performing inter-cylinder air-fuel ratio control, $SO_X$ is stored over the entire region of the upstream side exhaust purification catalyst in the direction of flow of exhaust. In particular, much $SO_X$ is stored at the back.

On the other hand, FIG. 7B shows the results in the case of maintaining the average exhaust air-fuel ratio of the exhaust gas flowing into the upstream side exhaust purification catalyst at a lean air-fuel ratio and performing the above-mentioned inter-cylinder air-fuel ratio control. Therefore, FIG. 7B shows the results in the case where the combustion air-fuel ratio is shifted from the lean air-fuel ratio to the rich side and lean side at each cylinder. As will be understood from FIG. 7B, when performing inter-cylinder air-fuel ratio control, a large amount of $SO_X$ is stored at the front of the upstream side exhaust purification catalyst in the direction of flow of exhaust. Almost no $SO_X$ is stored at the back.

If performing inter-cylinder air-fuel ratio control in this way, the $SO_X$ is stored at the front of the upstream side exhaust purification catalyst probably because there is a relation between the storage of $SO_X$ and the adsorption and release of oxygen. When performing inter-cylinder air-fuel ratio control, the cylinders with combustion air-fuel ratios of rich air-fuel ratios discharge exhaust gas containing excess unburned HC and CO. On the other hand, the cylinders with combustion air-fuel ratios of lean air-fuel ratios discharge exhaust gas containing excess oxygen. As a result, the exhaust gas flowing into the upstream side exhaust purification catalyst contains unburned HC and CO and oxygen in large amounts even if the average exhaust air-fuel ratio is a stoichiometric air-fuel ratio.

As a result, when performing inter-cylinder air-fuel ratio control (FIG. 7B), oxygen is actively absorbed and released at the front of the upstream side exhaust purification catalyst. Here, storage of $SO_X$ at the carrier of the upstream side exhaust purification catalyst is believed to easily occur in the region of the upstream side exhaust purification catalyst where oxygen is actively absorbed and released. For this reason, when performing inter-cylinder air-fuel ratio control, $SO_X$ is stored in a large amount at the front of the upstream side exhaust purification catalyst where oxygen is actively absorbed and released and as a result $SO_X$ is no longer stored at the backt.

On the other hand, when not performing inter-cylinder air-fuel ratio control (FIG. 7A), the unburned HC and CO and oxygen contained in the exhaust gas flowing into the upstream side exhaust purification catalyst does not become that large. For this reason, at the front side of the upstream side exhaust purification catalyst, not that active a reaction occurs and accordingly oxygen is not actively absorbed and released at the front side. As a result, oxygen is actively absorbed and released from the middle to back of the upstream side exhaust purification catalyst. For this reason, when not performing inter-cylinder air-fuel ratio control, it is believed that $SO_X$ is stored over the entire region in the direction of flow of exhaust. In particular, it is believed that $SO_X$ is stored in a large amount from the middle to back of the upstream side exhaust purification catalyst. Note that, in the example shown in FIG. 7, the case is shown where the average exhaust air-fuel ratio of the exhaust gas flowing into the upstream side exhaust purification catalyst is maintained at the stoichiometric air-fuel ratio, but a similar trend occurs even when maintaining the average exhaust air-fuel ratio of the exhaust gas flowing into the upstream side exhaust purification catalyst at a lean air-fuel ratio.

Here, the maximum storable oxygen amount Cmax of the upstream side exhaust purification catalyst changes according to the state of storage of $SO_X$. Specifically, if $SO_X$ is stored in a certain region of the upstream side exhaust purification catalyst, the amount of storable oxygen in the region decreases. That is, in the region where $SO_X$ is stored, part of the sulfur component is adsorbed on the precious metal surface. If the sulfur component is adsorbed on the precious metal surface, the catalytic activity at the precious metal falls, so in the state where oxygen is stored at the carrier around the precious metal, even if exhaust gas containing unburned HC or CO flows into the upstream side exhaust purification catalyst, it no longer becomes possible to cause the stored oxygen and unburned HC and CO to react. Accordingly, the oxygen stored in the upstream side exhaust purification catalyst can no longer be released and as a result a decrease in the maximum storable oxygen amount Cmax is invited.

Therefore, if inter-cylinder air-fuel ratio control is not performed (FIG. 7A), $SO_X$ is stored across the entire region of the upstream side exhaust purification catalyst in the direction of flow of exhaust, so the maximum storable oxygen amount Cmax of the upstream side exhaust purification catalyst becomes smaller. As opposed to this, when performing inter-cylinder air-fuel ratio control (FIG. 7B), at the back of the upstream side exhaust purification catalyst, a region remains where almost no $SO_X$ is stored. As a result, in this case, it is possible to suppress the drop in the maximum storable oxygen amount Cmax.

Further, if performing inter-cylinder air-fuel ratio control when the average air-fuel ratio correction amount AFCav is the lean set correction amount AFClean (for example, the times $t_2$ to $t_3$ of FIG. 4), at the lean side cylinders, the air-fuel ratio correction amount AFC becomes the lean set correction amount AFClean plus the amount of change $\alpha$. As a result, the combustion air-fuel ratios of the lean side cylinders become lean with large lean degrees.

Here, as explained referring to FIG. 6A, the larger the lean degree of the air-fuel ratio of the exhaust gas flowing into the upstream side exhaust purification catalyst 20, the more strongly the $SO_X$ is stored at the ceria. Therefore, by performing inter-cylinder air-fuel ratio control in addition to average air-fuel ratio control, it is possible to make the $SO_X$ be strongly stored at the ceria and thereby possible to suppress the migration of the sulfur component from the ceria to the platinum surface.

Due to the above, according to the present embodiment, by performing the above-mentioned such average air-fuel ratio control, it is possible to keep the sulfur component adsorbed at the carrier (ceria etc.) from migrating to the precious metal (platinum etc.) and, due to this, possible to keep the catalytic activity of the precious metal from dropping. In addition, by performing the above-mentioned such inter-cylinder air-fuel ratio control, it is possible to keep $SO_X$ from being stored at the carrier at the back of the upstream side exhaust purification catalyst 20 and due to this possible to keep the maximum storable oxygen amount from falling. Furthermore, it is possible to keep the sulfur component adsorbed on the carrier from migrating to the precious metal even if performing the above-mentioned inter-cylinder air-fuel ratio control.

Note that, in the above embodiment, in inter-cylinder air-fuel ratio control, the amount of change $\alpha$ becomes the same at all of the rich side cylinders and accordingly the combustion air-fuel ratios become the same. However, there is no need to make the amount of change $\alpha$ constant at all of the rich side cylinders. It is also possible to make the amount of change different values among the rich side cylinders. In this case, the combustion air-fuel ratios differ among the rich side cylinders. Further, the same can also be said for the lean side cylinders.

Further, in the above embodiment, in inter-cylinder air-fuel ratio control, the combustion air-fuel ratios are made to shift from the average air-fuel ratio to either the rich side or lean side in all of the cylinders. However, in inter-cylinder air-fuel ratio control, it is also possible to make the amount of change zero and make the combustion air-fuel ratios match the average air-fuel ratio at part of the cylinders.

In addition, in the above embodiment, in inter-cylinder air-fuel ratio control, the number of rich side cylinders and the number of lean side cylinders were the same. However, the number of the rich side cylinders and the number of the lean side cylinders do not necessarily have to be the same. Therefore, for example, in the case of a 4-cylinder internal combustion engine, just one cylinder may be made a cylinder to be shifted to the rich side, while the remaining three cylinders or two or the remaining three cylinders may be made cylinders to be shifted to the lean side.

However, in each case as well, when the average air-fuel ratio is controlled to the lean air-fuel ratio by the average air-fuel ratio control, inter-cylinder air-fuel ratio control has to be performed so that the combustion air-fuel ratio becomes the rich air-fuel ratio at least at one of the cylinders among the plurality of cylinders. Further, even when the average air-fuel ratio is controlled by the rich air-fuel ratio by the average air-fuel ratio control, inter-cylinder air-fuel ratio control is preferably performed so that the combustion air-fuel ratio becomes the lean air-fuel ratio at least at one of the cylinders among the plurality of cylinders. Further, in inter-cylinder air-fuel ratio control, the combustion air-fuel ratios of the cylinders are preferably controlled so as to become richer than the average air-fuel ratio at part of the cylinders among the plurality of cylinders and so as to be leaner than the average air-fuel ratio at the remaining cylinders among the plurality of cylinders.

<Explanation of Specific Control>

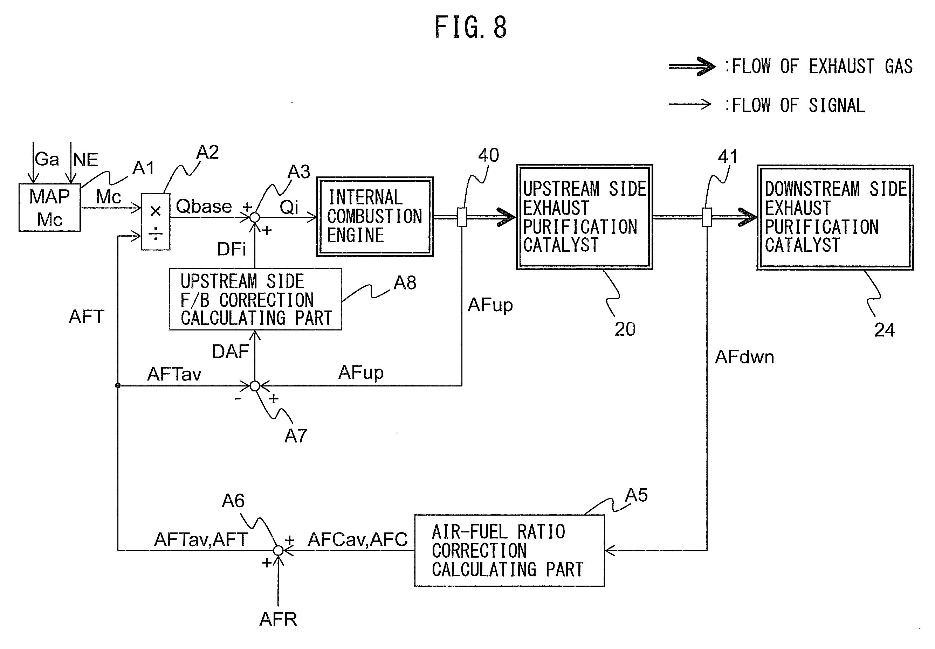

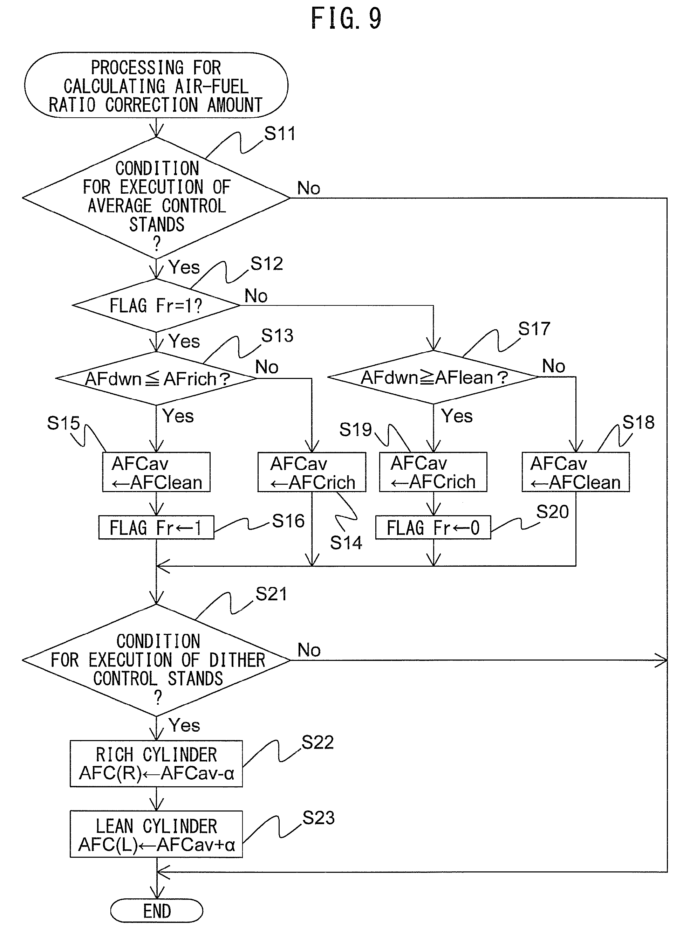

Next, referring to FIG. 8 and FIG. 9, the control device of the internal combustion engine in the above embodiment will be specifically explained. The control device in the present embodiment is comprised of, as shown by the functional block diagram of FIG. 8, the functional blocks A1 to A8. Below, while referring to FIG. 8, the different functional blocks will be explained. The operations at these functional blocks A1 to A8 basically are executed at the ECU 31 functioning as the control device of the internal combustion engine.

<Calculation of Fuel Injection Amount>

First, the calculation of the fuel injection amount will be explained. In calculating the fuel injection amount, the cylinder intake air calculating part A1, the basic fuel injection calculating part A2, and the fuel injection calculating part A3 are used.

The cylinder intake air calculating part A1 uses the intake air flow rate Ga, engine speed NE, and map or calculation formula stored in the ROM 34 of the ECU 31 as the basis to calculate the intake air amount Mc to the cylinders.

The intake air flow rate Ga is measured by the air flowmeter 39, while the engine speed NE is calculated based on the output of the crank angle sensor 44.

The basic fuel injection calculating part A2 divides the cylinder intake air amount Mc calculated by the cylinder intake air calculating part A1 by the target air-fuel ratio AFT for each cylinder to thereby calculate the basic fuel injection amount Qbase (Qbase=Mc/AFT). The target air-fuel ratio AFT is calculated by the later explained target air-fuel ratio setting part A6.

The fuel injection calculating part A3 adds to the basic fuel injection amount Qbase calculated by the basic fuel injection calculating part A2 the later explained F/B correction amount DFi to thereby calculate the fuel injection amount Qi (Qi=Qbase+DFi). The fuel of the thus calculated fuel injection amount Qi is made to be fed from the fuel injectors 11 and 12 by instructions on injection to the fuel injectors 11 and 12.

<Calculation of Target Air-Fuel Ratio>

Next, the calculation of the target air-fuel ratio will be explained. In calculating the target air-fuel ratio, the air-fuel ratio correction calculating part A5 and the target air-fuel ratio setting part A6 are used.

The air-fuel ratio correction calculating part A5 uses the output air-fuel ratio AFdwn of the downstream side air-fuel ratio sensor 41 as the basis to calculate the average air-fuel ratio correction amount AFCav and the air-fuel ratio correction amounts AFC of the cylinders. Specifically, it uses the flow chart shown in FIG. 9 as the basis to calculate the average air-fuel ratio correction amount AFCav and air-fuel ratio correction amounts AFC of the cylinders.

The target air-fuel ratio setting part A6 adds to the control center air-fuel ratio (in the present embodiment, the stoichiometric air-fuel ratio) AFR the average air-fuel ratio correction amount AFCav calculated at the air-fuel ratio correction calculating part A5 and the air-fuel ratio correction amounts AFC of the cylinders to calculate the target average air-fuel ratio AFTav and the target air-fuel ratios AFT of the cylinders. The thus calculated target air-fuel ratios AFT are input to the basic fuel injection calculating part A2 while the target average air-fuel ratio AFTav is input to the air-fuel ratio difference calculating part A7.

<Calculation of F/B Correction Amount>

Next, the calculation of the F/B correction amount based on the output air-fuel ratio AFup of the upstream side air-fuel ratio sensor 40 will be explained. In calculating the F/B correction amount, the air-fuel ratio difference calculating part A7 and F/B correction calculating part A8 are used.

The air-fuel ratio difference calculating part A7 subtracts from the output air-fuel ratio AFup of the upstream side air-fuel ratio sensor 40 the target average air-fuel ratio AFTav calculated by the target air-fuel ratio setting part A6 to thereby calculate the air-fuel ratio difference DAF (DAF=AFup-AFTav). This air-fuel ratio difference DAF is a value expressing the excess/deficiency of the amount of fuel feed with respect to the target average air-fuel ratio AFTav.

The F/B correction calculating part A8 processes the air-fuel ratio difference DAF calculated by the air-fuel ratio difference calculating part A7 by proportional integral derivative processing (PID processing) to thereby calculate the F/B correction amount DFi for compensating for the excess/deficiency of the fuel feed amount based on the following formula (1). The thus calculated F/B correction amount DFi is input into the fuel injection calculating part A3.

$$DFi = Kp \cdot DAF + Ki \cdot SDAF + Kd \cdot DDAF \qquad \ldots (1)$$

Note that, in the above formula (1), Kp is a preset proportional gain (proportional constant), Ki is a preset integral gain (integral constant), and Kd is a preset derivative gain (derivative constant). Further, DDAF is the time differentiated value of the air-fuel ratio difference DAF and is calculated by dividing the difference between the currently updated air-fuel ratio difference DAF and the previously updated air-fuel ratio difference DAF by the time corresponding to the updating interval. Further, SDAF is the time differentiated value of the air-fuel ratio difference DAF. This time differentiated value DDAF is calculated by adding to the previously updated time differentiated value DDAF the currently updated air-fuel ratio difference DAF (SDAF=DDAF+DAF).

<Flow Chart>

FIG. 9 is a flow chart showing a control routine of processing for calculating an air-fuel ratio correction amount in the present embodiment. The illustrated control routine is performed by interruption every certain time interval.

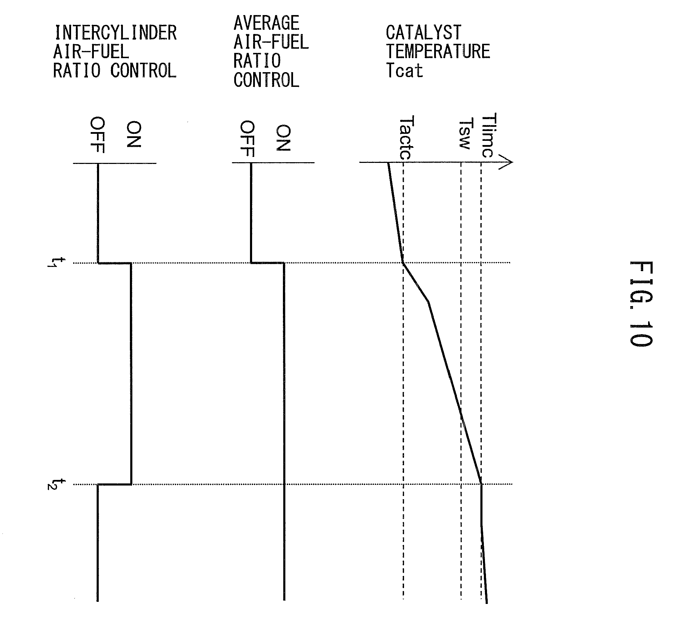

First, at step S11, it is judged whether a condition for execution of the average air-fuel ratio control stands. As cases where the condition for execution of the average air-fuel ratio control stands, for example, the air-fuel ratio sensors 40 and 41 being the activation temperature or more and, as explained referring to FIG. 10, the temperature of the upstream side exhaust purification catalyst 20 being a certain temperature or more etc. may be mentioned. If it is judged that the condition for execution of average air-fuel ratio control does not stand, the control routine is made to end. On the other hand, if it is judged that the condition for execution of the average air-fuel ratio control stands, the routine proceeds to step S12. At step S12, it is judged whether the rich flag Fr is "1". The rich flag Fr is a flag which is set to "1" in average air-fuel ratio control when the average air-fuel ratio is controlled to the rich air-fuel ratio and is set to "0" when it is controlled to the lean air-fuel ratio.

If, at average air-fuel ratio control, the average air-fuel ratio is controlled to the rich air-fuel ratio, at step S12, it is judged that the rich flag Fr is "1" and the routine proceeds to step S13. At step S13, it is judged whether the output air-fuel ratio AFdwn of the downstream side air-fuel ratio sensor 41 is maximally equal to the rich judged air-fuel ratio AFrich. If the air-fuel ratio of the exhaust gas flowing out from the upstream side exhaust purification catalyst 20 becomes substantially the stoichiometric air-fuel ratio, at step S13, it is judged that the output air-fuel ratio AFdwn of the downstream side air-fuel ratio sensor 41 is larger than the rich judged air-fuel ratio AFrich and the routine proceeds to step S14. At step S14, the average air-fuel ratio correction amount AFCav is set to the rich set correction amount AFCrich. Due to this, the average air-fuel ratio is maintained at the rich air-fuel ratio.

Next, at step S21, it is judged whether the condition for execution of inter-cylinder air-fuel ratio control (dither control) stands. As cases where the condition for execution of inter-cylinder air-fuel ratio control stands, for example, the air-fuel ratio sensors 40 and 41 being the activation temperature or more and, as explained referring to FIG. 10, the temperature of the upstream side exhaust purification catalyst 20 being within a certain range etc. may be mentioned. If it is judged that the condition for execution of inter-cylinder air-fuel ratio control does not stand, the control routine is made to end. On the other hand, if it is judged that the condition for execution of inter-cylinder air-fuel ratio control stands, the routine proceeds to step S22. At step S22, the value of the average air-fuel ratio correction amount AFCav minus a preset predetermined amount of change $\alpha$ is made the air-fuel ratio correction amount AFC(R) of the rich side cylinders. Next, at step S23, the value of the average air-fuel ratio correction amount AFCav plus a preset predetermined amount of change $\alpha$ is made the air-fuel ratio correction amount AFC(L) of the lean side cylinders and the control routine is made to end.

After that, if the air-fuel ratio of the exhaust gas flowing out from the upstream side exhaust purification catalyst 20 becomes the rich air-fuel ratio, at the next control routine, at step S13, it is judged that the output air-fuel ratio AFdwn of the downstream side air-fuel ratio sensor 41 is maximally equal to the rich judged air-fuel ratio AFrich and the routine proceeds to step S15. At step S15, the average air-fuel ratio correction amount AFCav is set to the lean set correction amount AFClean. Next, at step S16, the rich flag Fr is set to 1 and the routine proceeds to step S21.

If the rich flag Fr is set to "1", at the next control routine, the routine proceeds from step S12 to step S17. At step S17, it is judged whether the output air-fuel ratio AFdwn of the downstream side air-fuel ratio sensor 41 is at least equal to the lean judged air-fuel ratio AFlean. If the air-fuel ratio of the exhaust gas flowing out from the upstream side exhaust purification catalyst 20 becomes substantially the stoichiometric air-fuel ratio, at step S17, it is judged that the output air-fuel ratio AFdwn of the downstream side air-fuel ratio sensor 41 is smaller than the lean judged air-fuel ratio AFlean and the routine proceeds to step S18. At step S18, the average air-fuel ratio correction amount AFCav is set to the lean set correction amount AFClean. Due to this, the average air-fuel ratio is maintained at the lean air-fuel ratio and the routine proceeds to step S21.

After that, if the air-fuel ratio of the exhaust gas flowing out from the upstream side exhaust purification catalyst 20 becomes the lean air-fuel ratio, at the next control routine, at step S17, it is judged that the output air-fuel ratio AFdwn of the downstream side air-fuel ratio sensor 41 is the lean judged air-fuel ratio AFlean or more and the routine proceeds to step S19. At step S19, the average air-fuel ratio correction amount AFCav is set to the rich set correction amount AFCrich. Next, at step S20, the rich flag Fr is reset to "0" and the routine proceeds to step S21.

<Timing of Execution of Average Air-Fuel Ratio Control and Inter-cylinder Air-Fuel Ratio Control>

Next, referring to FIG. 10, the relationship between the temperature of the upstream side exhaust purification catalyst 20 and the timings of execution of the average air-fuel ratio control and inter-cylinder air-fuel ratio control will be explained. FIG. 10 is a time chart of the temperature of the upstream side exhaust purification catalyst 20, any execution of average air-fuel ratio control, and any execution of inter-cylinder air-fuel ratio control.

As will be understood from FIG. 10, in the present embodiment, when the temperature of the upstream side exhaust purification catalyst 20 is less than the activation temperature (for example, 400°C where the removal rate becomes about 50%) Tactc, the above-mentioned inter-cylinder air-fuel ratio control is not performed. Instead, in this case, the combustion air-fuel ratios of the cylinders are controlled so that the combustion air-fuel ratios become equal at all of the cylinders. In addition, in the present embodiment, when the upstream side exhaust purification catalyst 20 is less than the activation temperature Tactc, average air-fuel ratio control is not performed. Instead, in this case, the air-fuel ratio correction amounts AFC of all of the cylinders are maintained at zero and therefore the combustion air-fuel ratios are made substantially the stoichiometric air-fuel ratio at all of the cylinders.

Further, as will be understood from FIG. 10, in the present embodiment, when the temperature of the upstream side exhaust purification catalyst 20 is higher than the upper limit temperature (for example, 800°C) Tlimc, inter-cylinder air-fuel ratio control is not performed. Instead, in this case, the combustion air-fuel ratios of all cylinders are controlled so that the combustion air-fuel ratios become equal at all cylinders. At this time, the average air-fuel ratio control continues to be executed, so the combustion air-fuel ratios of the cylinders are controlled to match the target average air-fuel ratio. However, in the present embodiment, when the temperature of the upstream side exhaust purification catalyst 20 falls from a temperature higher than the upper limit temperature Tlimc, even if the temperature of the upstream side exhaust purification catalyst 20 becomes the upper limit temperature Tlimc or less, until reaching a switching temperature (for example, 750°C) Tsw lower than the upper limit temperature Tlimc and higher than the activation temperature Tactc, inter-cylinder air-fuel ratio control is not performed. In this case as well, instead, the combustion air-fuel ratios of all cylinders are controlled so that the combustion air-fuel ratios become equal at all cylinders. Further, when the temperature of the upstream side exhaust purification catalyst 20 becomes the switching temperature Tsw or less, inter-cylinder air-fuel ratio control is performed.

Next, the effect due to change of the state of execution of the average air-fuel ratio control and inter-cylinder air-fuel ratio control corresponding to the temperature in this way will be explained. Here, if performing the above-mentioned average air-fuel ratio control or inter-cylinder air-fuel ratio control, the unburned HC and CO and $NO_X$ flow into the upstream side exhaust purification catalyst 20. For this reason, if the upstream side exhaust purification catalyst 20 fails to reach the activation temperature, these unburned HC and CO and $NO_X$ can end up flowing out without being removed at the upstream side exhaust purification catalyst 20. In the present embodiment, when the upstream side exhaust purification catalyst 20 is lower than the activation temperature, average air-fuel ratio control and inter-cylinder air-fuel ratio control are not performed. For this reason, the concentration of unburned HC and CO in the exhaust gas flowing into the upstream side exhaust purification catalyst 20 falls and therefore it is possible to suppress the outflow of unburned HC and CO etc. from the upstream side exhaust purification catalyst 20.

Further, if the temperature of the upstream side exhaust purification catalyst 20 becomes higher than the upper limit temperature, the precious metal carried on the upstream side exhaust purification catalyst 20 sinters the higher the temperature and accordingly the catalytic activity ends up falling. On the other hand, if performing inter-cylinder air-fuel ratio control, unburned HC and CO and oxygen flow into the upstream side exhaust purification catalyst 20, so at the upstream side exhaust purification catalyst 20, these unburned HC and CO burn and the temperature of the upstream side exhaust purification catalyst 20 rises. As opposed to this, in the present embodiment, if the temperature of the upstream side exhaust purification catalyst 20 becomes the upper limit temperature or more, the inter-cylinder air-fuel ratio control is stopped. Due to this, the temperature of the upstream side exhaust purification catalyst 20 is kept from rising even after reaching the upper limit temperature and therefore the sintering of the precious metal carried on the upstream side exhaust purification catalyst 20 can be suppressed. Note that, in the present embodiment, the "upper limit temperature" means the temperature at which the catalytic activity ends up falling to a certain level or more due to the temperature rise of the upstream side exhaust purification catalyst 20.

<Control of Fuel Injectors>

In the above-mentioned way, the internal combustion engine in the present embodiment has two types of fuel injectors of the cylinder fuel injectors 11 and the port fuel injectors 12. In a thus configured internal combustion engine, in accordance with the engine operating state, part of the fuel in the fuel which is fed to the combustion chambers 5 is fed from the cylinder fuel injectors 11 and the remaining fuel is fed from the port fuel injectors 12. The ratio of the amount of fuel feed from the cylinder fuel injectors 11 and the amount of fuel feed from the port fuel injectors 12 changes depending on the engine operating state.

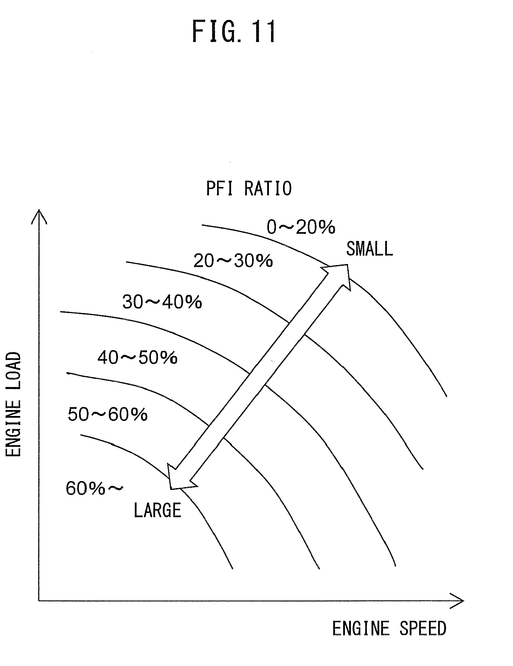

FIG. 11 is a view showing an example of a map expressing the ratio of the amount of fuel feed from a port fuel injector 12 to the total amount of fuel feed to the cylinder when inter-cylinder air-fuel ratio control is not being performed (below, referred to as the "PFI ratio"). As will be understood from FIG. 11, the PFI ratio is set to become larger the lower the engine speed and the lower the engine load. Below, the reason for setting the PFI ratio in this way will be explained.

If fuel is fed from a cylinder fuel injector 11, the air-fuel mixture fed to the combustion chamber 5 vaporizes inside the combustion chamber 5. Due to the heat of vaporization at this time, the temperature of the air-fuel mixture inside the combustion chamber 5 can be lowered. For this reason, the temperature of the air-fuel mixture when the piston 3 reaches compression top dead center (compression end temperature) can be lowered. Due to this, it is possible to suppress the occurrence of knocking etc. or raise the heat efficiency. Therefore, from the viewpoint of suppressing the occurrence of knocking, it is preferable to set the PFI ratio low.

On the other hand, fuel is fed from a cylinder fuel injector 11 during the compression stroke. For this reason, the time period from when fuel is fed from the cylinder fuel injector 11 to when it is ignited by the spark plug 10 is relatively short. For this reason, when fuel is being fed from the cylinder fuel injector 11, the fed fuel has a hard time diffusing into the air and has a hard time mixing with the air. For this reason, the air-fuel mixture of the fuel and air becomes a nonhomogeneous air-fuel mixture and the combustion of the air-fuel mixture easily becomes unstable.

On the other hand, when feeding fuel from a port fuel injector 12, the time period from when fuel is fed from the port fuel injector 12 to when it is ignited by the spark plug 10 is relatively long. For this reason, when feeding fuel from the port fuel injector 12, the fed fuel is sufficiently mixed inside the intake port and inside the combustion chamber 5. For this reason, the air-fuel mixture of the fuel and air becomes a relatively homogeneous air-fuel mixture and the air-fuel mixture stably burns. For this reason, the higher the PFI ratio is made, the more easily the air-fuel mixture becomes a homogeneous air-fuel mixture and the more easily the combustion stabilizes.

In this regard, the higher the engine load, the greater the amount of intake air fed to a combustion chamber 5 of a cylinder. The greater the amount of intake air, the faster the flow rate of the intake gas flowing into the combustion chamber 5 and, as a result, the larger the disturbance in the intake gas in the combustion chamber 5. If large disturbance occurs in the intake gas in this way, the fuel and air in the combustion chamber 5 are more easily mixed. Therefore, when the engine load is high, even if the PFI ratio is set low, the fuel and air are sufficiently mixed and a homogeneous air-fuel mixture is formed. Therefore, in the present embodiment, as shown in FIG. 11, the higher the engine load, that is, the larger the disturbance occurring in the air-fuel mixture in the combustion chamber 5, the lower the PFI ratio is set, that is, the greater the feed of fuel from the cylinder fuel injector 11 with respect to the total amount of injection to the cylinder. Due to this, the combustion of the air-fuel mixture can be stabilized while knocking can be kept from occurring as much as possible.

On the other hand, the higher the engine speed becomes, the faster the flow rate of the air fed to a combustion chamber 5 of a cylinder. As a result, a large disturbance occurs in the intake air in the combustion chamber 5 and therefore the fuel and air inside the combustion chamber 5 are more easily mixed. Therefore, when the engine speed is high, even if the PFI ratio is set low, the fuel and air are sufficiently mixed and a homogeneous air-fuel mixture is formed. Therefore, in the present embodiment, as shown in FIG. 11, the higher the engine speed, that is, the larger the disturbance caused in the air-fuel mixture inside the combustion chamber 5, the lower the PFI ratio is set, that is, the greater the amounts of fuel fed from a cylinder fuel injector 11 with respect to the total amount of injection to the cylinder. Due to this, the combustion of the air-fuel mixture can be stabilized while knocking can be kept from occurring as much as possible.

Further, as explained above, FIG. 11 shows a PFI ratio when inter-cylinder air-fuel ratio control is not being performed, therefore, when, for example, the temperature of the upstream side exhaust purification catalyst 20 is higher than the upper limit temperature Tlimc. As will be understood from FIG. 11, in the region where the engine load is high and the engine speed is high, the PFI ratio is set to 0 to 20%. Therefore, in this region, almost all of the fuel is fed from the cylinder fuel injectors 11. Further, in the example shown in FIG. 11, in over half of the region in the region comprised of the engine load and engine speed, the PFI ratio becomes 50% or less.

Note that, the map of the PFI ratio shown in FIG. 11 is one example. The PFI ratio when inter-cylinder air-fuel ratio control is not being performed need not necessarily be set as shown in FIG. 11. However, whatever the case, the PFI ratio when inter-cylinder air-fuel ratio control is not being performed becomes 50% or less at least at part of the region comprised of the engine load and engine speed.

<Problems in Above Control>

In this regard, as explained with reference to FIG. 4, in average air-fuel ratio control, the average air-fuel ratio is alternately switched between a rich air-fuel ratio and a lean air-fuel ratio. In addition, in inter-cylinder air-fuel ratio control, at part of the cylinders, the combustion air-fuel ratios are made air-fuel ratios leaner than the average air-fuel ratio. As a result, in this part of the cylinders, the combustion air-fuel ratios become lean air-fuel ratios with large lean degrees. If in this way the combustion air-fuel ratios become lean air-fuel ratios with large lean degrees, combustion of the air-fuel mixture easily deteriorates.

Therefore, even if inter-cylinder air-fuel ratio control is being performed, as shown in FIG. 11, if setting the PFI ratios in the same way as the case where inter-cylinder air-fuel ratio control is not being performed, deterioration of combustion ends up being invited at cylinders where the combustion air-fuel ratios are set leaner than the average air-fuel ratio.

<Control of PFI Ratio When Performing Inter-cylinder Air-Fuel Ratio Control>

Therefore, in the present embodiment, when inter-cylinder air-fuel ratio control is being performed, the feed ratio is controlled so that the amounts of fuel fed from the port fuel injectors 12 become greater than the amounts of fuel fed from the cylinder fuel injectors 11 for the cylinders where the combustion air-fuel ratios are set leaner than the average air-fuel ratio (lean side cylinders). That is, the feed ratio is controlled so that the PFI ratios become larger than 50% for the lean side cylinders in inter-cylinder air-fuel ratio control.

Further, in the present embodiment, when inter-cylinder air-fuel ratio control is being performed, the feed ratio is controlled so that the amounts of fuel fed from the port fuel injectors 12 become smaller than the amounts of fuel fed from the cylinder fuel injectors 11 for the cylinders where the combustion air-fuel ratios are set richer than the average air-fuel ratio (rich side cylinders). That is, the feed ratio is controlled so that the PFI ratios becomes less than 50% for the rich side cylinders in inter-cylinder air-fuel ratio control.

Due to the above, in the present embodiment, it can be said that when inter-cylinder air-fuel ratio control is being performed, the feed ratio is controlled so that the PFI ratios at the lean side cylinders become at least the PFI ratios at the rich side cylinders, preferably become larger than the PFI ratios at the rich side cylinders.

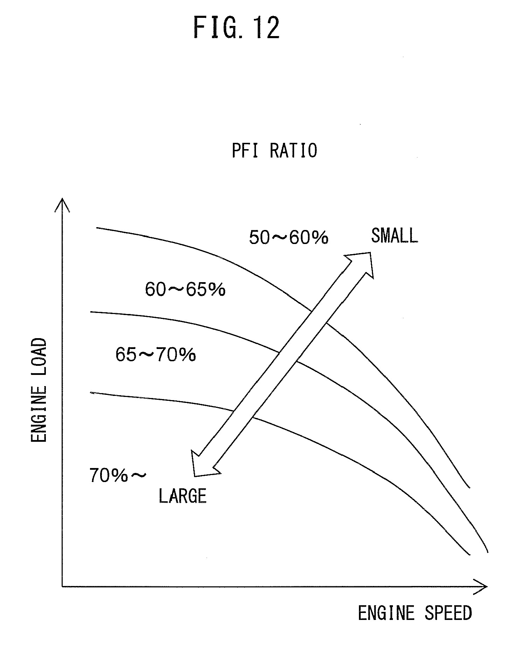

FIG. 12 is a view showing an example of a map expressing the PFI ratios at lean side cylinders when inter-cylinder air-fuel ratio control is being performed. As will be understood from FIG. 12, the PFI ratios are set to become larger the lower the engine speed and the lower the engine load. The reasons the PFI ratios are set in this way are similar to the reasons explained with reference to FIG. 11.

In addition, as shown in FIG. 12, in the region where the engine load is high and the engine speed is high, the PFI ratios are set to 50 to 60%. In addition, the PFI ratios are set so as to become larger the lower the engine load and the lower the engine speed, so the PFI ratios are set to become larger than 50% over the entire region. In particular, in the example shown in FIG. 12, in the region where the engine load is low and the engine speed is low, the PFI ratios are set to values larger than 70%.

In this way, according to the present embodiment, the PFI ratios at the lean side cylinders are set to become larger than 50% in the entire region. For this reason, at the lean side cylinders, fuel is mainly fed from the port fuel injectors 12. Therefore, at the lean side cylinders, even if the combustion air-fuel ratios become lean air-fuel ratios with large lean degrees, deterioration of combustion of the air-fuel mixture can be suppressed.

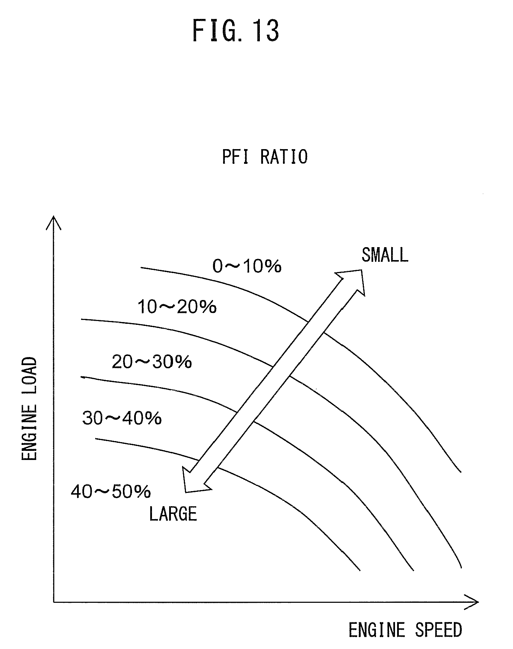

FIG. 13 is a view showing an example of a map expressing the PFI ratios at rich side cylinders when inter-cylinder air-fuel ratio control is being performed. In the map shown in FIG. 13 as well, in the same way as the map shown in FIG. 12, the PFI ratios are set to become larger the lower the engine speed and the lower the engine load.

In addition, as shown in FIG. 13, in the region where the engine load is low and the engine speed is low, the PFI ratios are set to 40 to 50%. In addition, the PFI ratios are set so as to become smaller the higher the engine load and the higher the engine speed, so the PFI ratios are set to become less than 50% over the entire region. In particular, in the example shown in FIG. 12, in the region where the engine load is high and engine speed is high, the PFI ratios are set to 0 to 10%.

In the present embodiment, as explained above, when inter-cylinder air-fuel ratio control is performed, at the lean side cylinders, the PFI ratios are set to as to always become larger than 50%, while at the rich side cylinders, the PFI ratios are set so as to always become less than 50%. As a result, in the present embodiment, when inter-cylinder air-fuel ratio control is being performed, the PFI ratios at the lean side cylinders become larger than the PFI ratios at the rich side cylinders.

In this way, according to the present embodiment, the PFI ratios at the rich side cylinders are set so as to become less than 50% in the entire region. For this reason, at the rich side cylinders, the fuel is fed mainly from the cylinder fuel injectors 11. Here, as explained above, at the rich side cylinders, there is seldom deterioration of combustion like in the above-mentioned lean side cylinders. Therefore, even if fuel is mainly fed from the cylinder fuel injectors 11, not much deterioration of combustion occurs in the rich side cylinders. On the other hand, mainly feeding fuel by the cylinder fuel injectors 11 enables the heat efficiency at the rich side cylinders to be raised as explained above.

In addition, in the present embodiment, at the rich side cylinders when inter-cylinder air-fuel ratio control is performed, the timings of fuel feed from the cylinder fuel injectors 11 are set so that stratified combustion is performed. Therefore, at the rich side cylinders when inter-cylinder air-fuel ratio control is performed, the fuel is fed from the cylinder fuel injectors 11 in the latter half of the compression stroke.

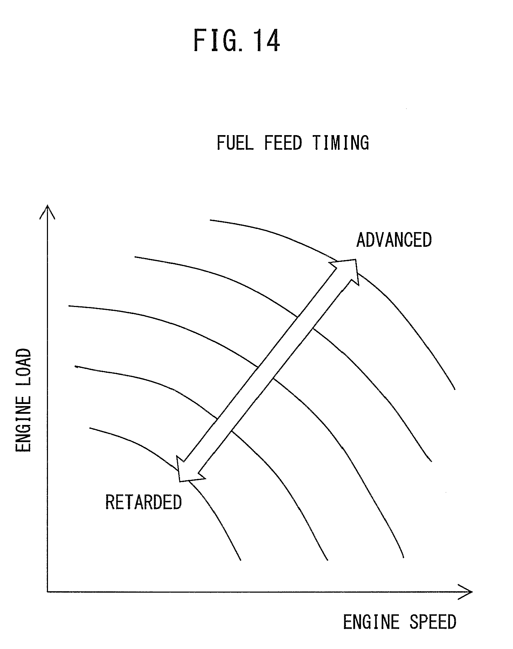

FIG. 14 is a view showing an example of a map expressing the timings of feed of fuel from the cylinder fuel injectors 11 at the rich side cylinders when inter-cylinder air-fuel ratio control is performed. As will be understood from FIG. 14, the timings of feed of fuel from the cylinder fuel injectors 11 are set so that the lower the engine load and the lower the engine speed, the more retarded they are made. Below, the reason for setting the fuel feed timing based on the engine load and engine speed in this way will be explained.

If the engine load becomes higher, along with this, the amounts of fuel injection from the cylinder fuel injectors 11 increases. The amounts of fuel fed from the cylinder fuel injectors 11 per unit time are fixed, so to make the fuel injection amounts increase, it is necessary to increase the time periods of feed of fuel from the cylinder fuel injectors 11. For this reason, regardless of the engine load, all of the fuel is fed before the ignition timing by the spark plugs 10 in the present embodiment by making the timing of fuel fed from the cylinder fuel injectors 11 more advanced the higher the engine load.

Further, at the same timing (crank angle), fuel is fed from the cylinder fuel injectors 11. At the same timing (crank angle), even if using spark plugs 10 for ignition, the higher the engine speed, the shorter the time period from feed of fuel to ignition. On the other hand, the time required for the fuel fed from the cylinder fuel injectors 11 to sufficiently diffuse around the spark plugs 10 does not change that much even if the engine speed changes. Therefore, in the present embodiment, the higher the engine speed, the more the timings of feed of fuel from the cylinder fuel injectors 11 are retarded to thereby secure the time required for the fuel to diffuse around the spark plugs 10 exactly enough for causing stratified combustion.

In this way, at the rich side cylinders when inter-cylinder air-fuel ratio control is being performed, stratified combustion is performed. If stratified combustion is performed in this way, unburned HC and CO are easily generated in the combustion chambers 5 compared with homogeneous combustion. For this reason, larger amounts of unburned HC and CO can be made to flow out from the combustion chambers 5 of the rich side cylinders. In the above-mentioned way, inter-cylinder air-fuel ratio control is aimed at causing the unburned HC and CO flowing out from the rich side cylinders and the oxygen flowing out from the lean side cylinders to stimulate the adsorption and release of oxygen at the upstream side exhaust purification catalyst 20. Therefore, by performing stratified combustion at the rich side cylinders, it is possible to make the amounts of unburned HC and CO flowing out from the rich side cylinders increase and, as a result, it is possible to stimulate the adsorption and release of oxygen at the upstream side exhaust purification catalyst 20. Due to this, it is possible to suppress the drop in the maximum storable oxygen amount Cmax.

<Explanation Using Time Charts>

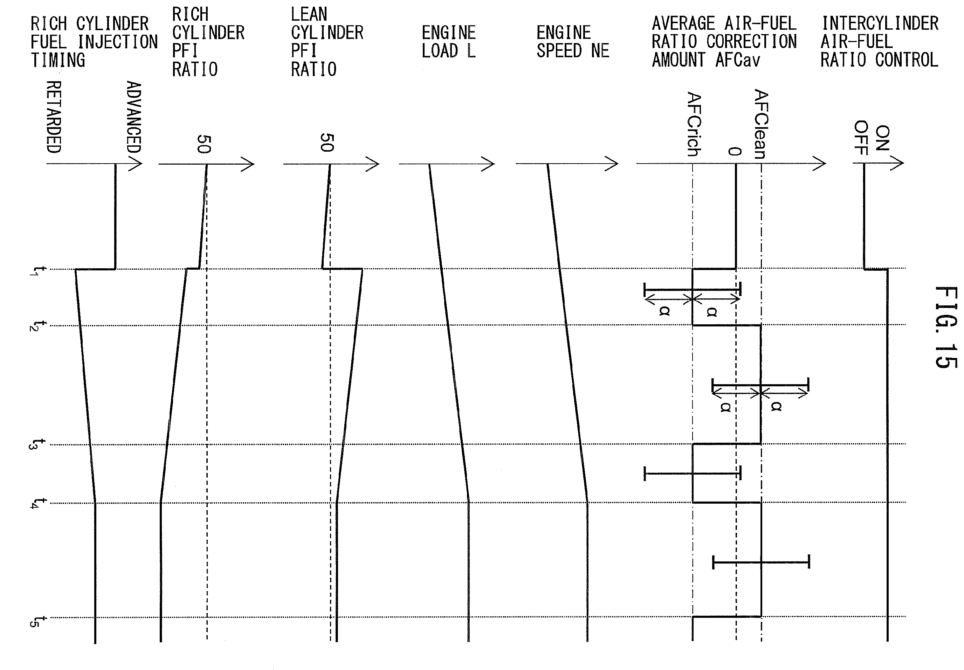

FIG. 15 is a time chart of parameters when inter-cylinder air-fuel ratio control is started such as the presence of any execution of inter-cylinder air-fuel ratio control, average air-fuel ratio correction amount AFCav, engine speed NE, engine load L, PFI ratios of the lean side cylinders, PFI ratios of the rich side cylinders, and the fuel injection timings of the rich side cylinders.

In the example shown in FIG. 15, in the state before the time $t_1$, inter-cylinder air-fuel ratio control is not performed. In addition, average air-fuel ratio control is also not performed. Therefore, at this time, at all of the cylinders, the PFI ratios are made the same ratio. Further, the PFI ratios at this time are set based on a map such as shown in FIG. 11. In the example shown in FIG. 15, before the time $t_1$, the engine speed NE and the engine load L gradually increase. Along with this, the PFI ratios are made to gradually decrease.

After that, in the example shown in FIG. 15, at the time $t_1$, the average air-fuel ratio control and inter-cylinder air-fuel ratio control are made to start. If at the time $t_1$, the inter-cylinder air-fuel ratio control is made to start, the PFI ratios at the lean side cylinders are set based on a map such as shown in FIG. 12. For this reason, at the time $t_1$, the PFI ratios at the lean side cylinders are made to rapidly increase compared with the PFI ratios before the time $t_1$. On the other hand, if at the time $t_1$ the inter-cylinder air-fuel ratio control is made to start, the PFI ratios of the rich side cylinders are set based on a map such as shown in FIG. 13. For this reason, at the time $t_1$, the PFI ratios at the rich side cylinders are made to decrease slightly. In addition, stratified combustion is performed at the rich side cylinders, so at the time $t_1$, the timing of feed of fuel at the rich side cylinders is retarded.

In the example shown in FIG. 15, at the time $t_1$ on as well, the engine speed NE and the engine load L gradually increase. For this reason, along with this, the PFI ratios at the rich side cylinders and the PFI ratios at the lean side cylinders both also are gradually decreased. In addition, at the time $t_1$ on, the timings of feed of fuel at the rich side cylinders is gradually made to advance. Note that, in the example shown in FIG. 15, at the times $t_1$, $t_3$, and $t_5$, the average air-fuel ratio correction amount AFCav is switched to the rich set correction amount AFCrich, while at the times $t_2$ and $t_4$, the average air-fuel ratio correction amount AFCav is switched to the lean set correction amount AFClean.

Further, in the example shown in FIG. 15, at the time $t_4$ on, the engine speed NE and the engine load L are maintained constant as is, For this reason, at the time $t_4$ on, the PFI ratios at the rich side cylinders and the PFI ratios at the lean side cylinders both are maintained constant as is. Similarly, the time $t_4$ on, the timing of feed of fuel at the rich side cylinders is maintained constant as is.

<Flow Chart of Processing for Setting PFI Ratio>

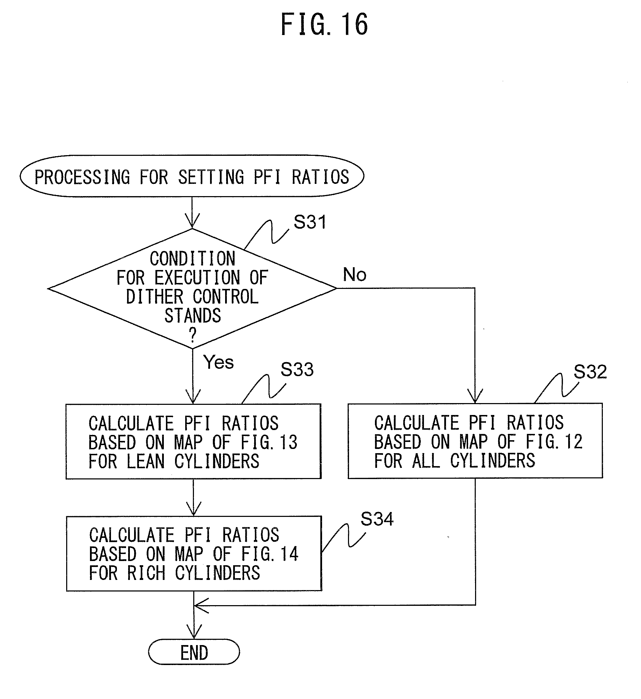

FIG. 16 is a flow chart showing a control routine of processing for setting the PFI ratios at the cylinders. The illustrated control routine is performed by interruption every certain time interval.

First, at step S31, in the same way as step S21 of FIG. 9, it is judged whether the condition for execution of inter-cylinder air-fuel ratio control (dither control) stands. If it is judged that the condition for execution of inter-cylinder air-fuel ratio control does not stand, that is, when inter-cylinder air-fuel ratio control is not being performed, the routine proceeds to step S32. At step S32, the engine load L detected by the load sensor 43 and the engine speed detected by the crank angle sensor 44 are used as the basis to calculate the PFI ratios of all of the cylinders using a map such as shown in FIG. 11 and the control routine is made to end.

On the other hand, when at step S31 it is judged that the condition for execution of inter-cylinder air-fuel ratio control stands, that is, when inter-cylinder air-fuel ratio control is being performed, the routine proceeds to step S33. At step S33, the engine load and engine speed detected by the load sensor 43 or crank angle sensor 44 are used as the basis to calculate the PFI ratios at the lean side cylinders using a map such as shown in FIG. 12. Next, at step S34, the detected engine load and engine speed are used as the basis to calculate the PFI ratios at the rich side cylinders using a map such as shown in FIG. 13 and the control routine is made to end.

(Second Embodiment)

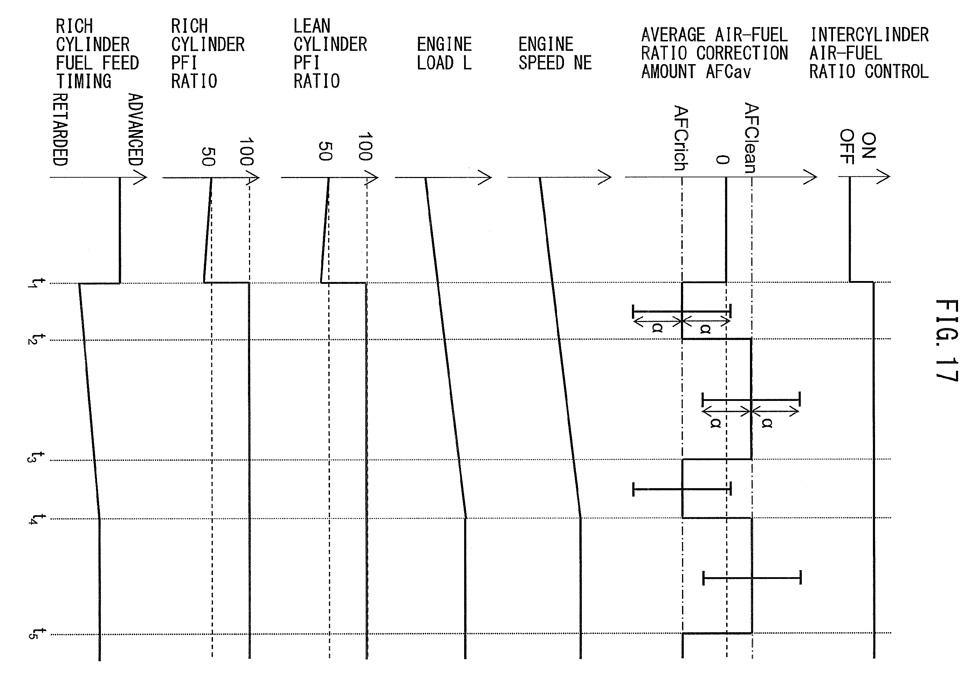

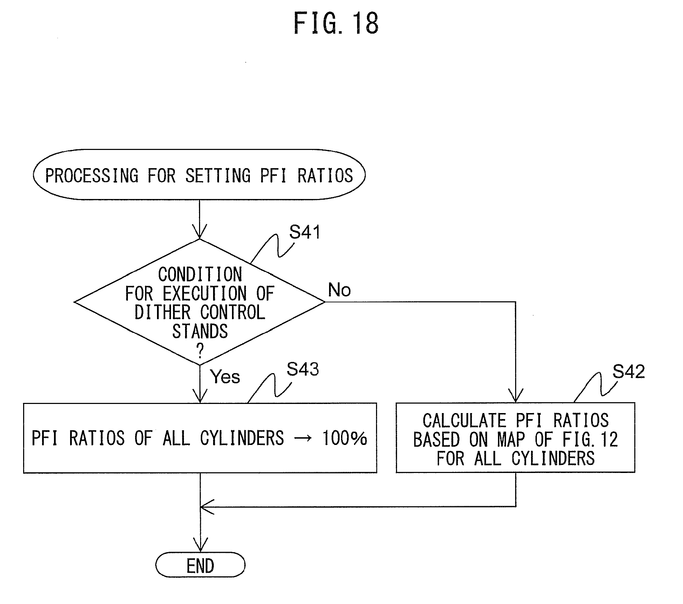

Next, referring to FIG. 17 and FIG. 18, an internal combustion engine according to a second embodiment of the present invention will be explained. The configuration and control in the internal combustion engine according to the second embodiment are similar to the configuration and control of the internal combustion engine according to the first embodiment except for the points explained below.

In the present embodiment, when inter-cylinder air-fuel ratio control is being performed, the feed ratio is controlled so that fuel is not fed from the cylinder fuel injectors 11 but is fed from only the port fuel injectors 12 for cylinders where the combustion air-fuel ratios are made lean air-fuel ratios (lean side cylinders). In addition, in the present embodiment, when inter-cylinder air-fuel ratio control is being performed, the feed ratio is controlled so that the cylinder fuel injectors 11 not feed fuel, but only the port fuel injectors 12 feed fuel for even cylinders where the combustion air-fuel ratios are made the rich air-fuel ratios (rich side cylinders).

FIG. 17 is a time chart, similar to FIG. 15, of an average air-fuel ratio correction amount AFCav etc. when inter-cylinder air-fuel ratio control is started. In the example shown in FIG. 17 as well, in the same way as the example shown in FIG. 15, in the state before the time $t_1$, inter-cylinder air-fuel ratio control is not performed. Further, average air-fuel ratio control is also not performed. Further, the PFI ratios at this time are set based on a map such as shown in FIG. 11. In the example shown in FIG. 17, the engine speed NE and the engine load L gradually increase. Along with this, the PFI ratios gradually are made to decrease.

After that, at the time $t_1$, the average air-fuel ratio control and inter-cylinder air-fuel ratio control are made to start. If, at the time $t_1$, the inter-cylinder air-fuel ratio control is made to start, the PFI ratios at the lean side cylinders and rich side cylinders are set to 100%. Therefore, from the time $t_1$ on, fuel is fed from only the port fuel injectors 12 regardless of the engine speed NE and the engine load L.

According to the present embodiment, by fuel being fed from only the port fuel injectors 12 during execution of inter-cylinder air-fuel ratio control, it is possible to suppress to the maximum extent deterioration of combustion particularly at the lean side cylinders.

FIG. 18 is a flow chart showing a control routine of processing for setting a PFI ratio at each cylinder in the second embodiment. The illustrated control routine is executed by interruption every certain time interval.

First, at step S41, in the same way as step S21 of FIG. 9, it is judged whether the condition for execution of inter-cylinder air-fuel ratio control (dither control ) stands. If it is judged that the condition for execution of inter-cylinder air-fuel ratio control does not stand, the routine proceeds to step S42. At step S42, the detected engine load L and engine speed NE are used as the basis to calculate the PFI ratios of all of the cylinders using a map such as shown in FIG. 11, then the control routine is made to end. On the other hand, when it is judged at step S41 that the condition for execution of inter-cylinder air-fuel ratio control does not stand, the routine proceeds to step S43. At step S43, the PFI ratios of all of the cylinders are made to be set to 100% and the control routine is made to end.

(Other Embodiments)

Note that, in the above first embodiment, during execution of inter-cylinder air-fuel ratio control, at the lean side cylinders, the PFI ratios were set to values larger than 50%, while at the rich side cylinders, the PFI ratios were set to values less than 50%. Further, in the second embodiment, during execution of inter-cylinder air-fuel ratio control, the PFI ratios were made 100% at all of the cylinders among the lean side cylinders and rich side cylinders. However, the modes of setting the PFI ratios are not limited to these embodiments.

In particular, during execution of inter-cylinder air-fuel ratio control, so long as the PFI ratios are set to values larger than 50% at the lean side cylinders, the PFI ratios at the lean side cylinders and rich side cylinders may be set to any ratios. Therefore, it is also possible to set the PFI ratios at values larger than 50% at the lean side cylinders and set the PFI ratios at 0%, 50% or more, 100%, or any values or ranges from 0 to 100% at the rich side cylinders. In addition, it is also possible to set the PFI ratios at 100% at the lean side cylinders and set the PFI ratios at 0%, less than 50%, 50% or more, or any values or ranges from 0 to 100% at the rich side cylinders.

However, in this case, when inter-cylinder air-fuel ratio control is being performed, it is preferable that the PFI ratios at the lean side cylinders become at least the PFI ratios at the rich side cylinders or become values larger than the PFI ratios at the rich side cylinders. Due to this, deterioration of combustion at the lean side cylinders can be suppressed.

<Other Mode of Average Air-Fuel Ratio Control>

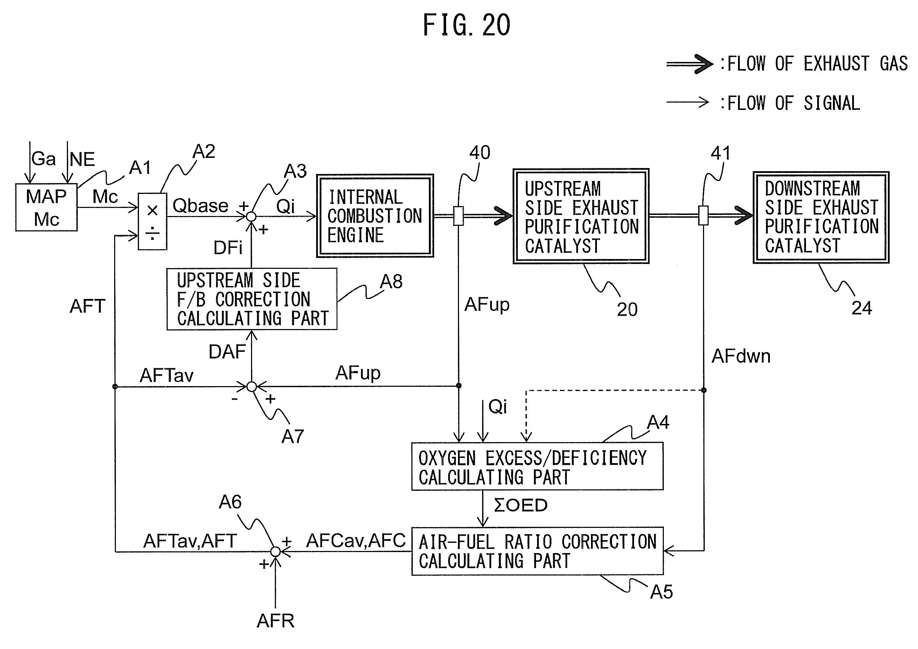

Next, referring to FIG. 20 to FIG. 22, another mode of average air-fuel ratio control will be explained. In the average air-fuel ratio control in the present embodiment, first, if, in the state where the target average air-fuel ratio is set to the rich set air-fuel ratio, it is judged that the output air-fuel ratio of the downstream side air-fuel ratio sensor 41 has become the rich air-fuel ratio, the target average air-fuel ratio is switched to the lean set air-fuel ratio. Due to this, the average air-fuel ratio changes to the lean air-fuel ratio.

If the target average air-fuel ratio is switched to the lean set air-fuel ratio, the oxygen excess/deficiency of the exhaust gas flowing into the upstream side exhaust purification catalyst 20 is cumulatively added. The "oxygen excess/deficiency" means the amount of oxygen becoming in excess or the amount of oxygen becoming deficient (amount of excess unburned HC and CO etc.) when trying to make the air-fuel ratio of the exhaust gas flowing into the upstream side exhaust purification catalyst 20 the stoichiometric air-fuel ratio. In particular, when the target average air-fuel ratio becomes the lean set air-fuel ratio, the oxygen in the exhaust gas flowing into the upstream side exhaust purification catalyst 20 becomes an excess. This excess oxygen is stored in the upstream side exhaust purification catalyst 20. Therefore, the cumulative value of the oxygen excess/deficiency (below, referred to as the "cumulative oxygen excess/deficiency") can be said to express the oxygen storage amount OSA of the upstream side exhaust purification catalyst 20.

Note that, the oxygen excess/deficiency is calculated based on the output air-fuel ratio of the upstream side air-fuel ratio sensor 40 and the flow rate of exhaust gas flowing through the upstream side exhaust purification catalyst 20 or the amounts of fuel feed from the fuel injectors 11 and 12 etc. Specifically, the oxygen excess/deficiency OED in the exhaust gas flowing into the upstream side exhaust purification catalyst 20 is, for example, calculated based on the following formula (2).

$$OED=0.23 \times Qi \times (AFup-AFR) \qquad ...(2)$$

where, 0.23 is the concentration of oxygen in the air, Qi is the fuel injection amount, AFup is the output air-fuel ratio of the upstream side air-fuel ratio sensor 40, and AFR is the air-fuel ratio become the control center (in the present embodiment, stoichiometric air-fuel ratio).

If the cumulative oxygen excess/deficiency obtained by cumulatively adding the thus calculated oxygen excess/deficiency becomes a predetermined switching reference value (corresponding to predetermined switching reference storage amount Cref) or more, the target average air-fuel ratio which had up to then been set to a lean set air-fuel ratio is switched to a rich set air-fuel ratio. That is, when the oxygen storage amount OSA of the upstream side exhaust purification catalyst 20 from when starting to control the average air-fuel ratio to the lean air-fuel ratio reaches a predetermined switching reference storage amount Cref, the average air-fuel ratio is switched to the rich air-fuel ratio.

After that, when the output air-fuel ratio of the downstream side air-fuel ratio sensor 41 again becomes the rich judged air-fuel ratio or less, the target average air-fuel ratio is again made the lean set air-fuel ratio. After that, a similar procedure is repeated. In this way, in the present embodiment as well, the target average air-fuel ratio of the exhaust gas flowing into the upstream side exhaust purification catalyst 20 is alternately switched between the lean set air-fuel ratio and the rich set air-fuel ratio.

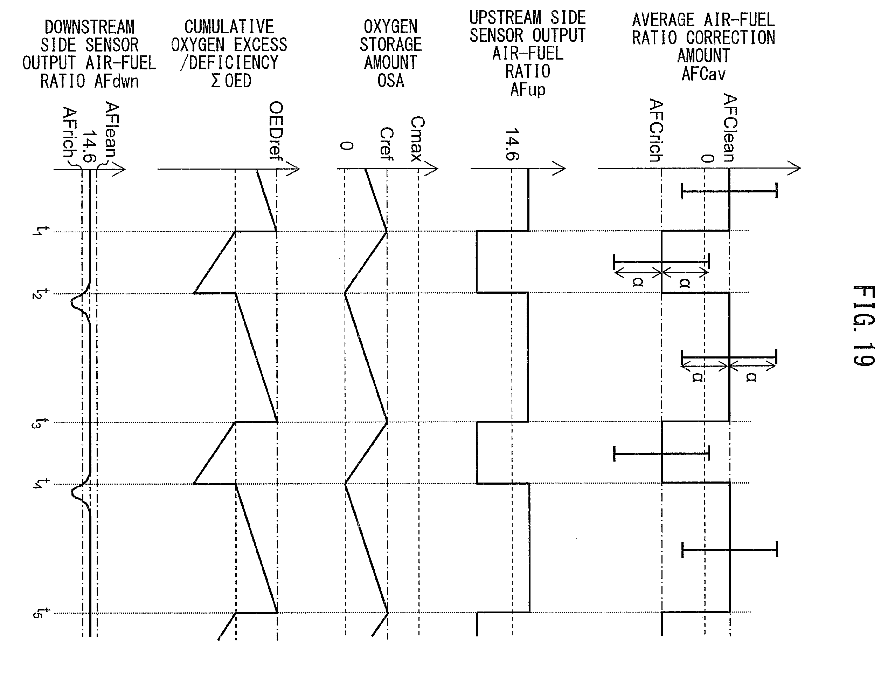

Referring to FIG. 19, the average air-fuel ratio control in the present embodiment will be specifically explained. FIG. 19 is a time chart, similar to FIG. 4, of the average air-fuel ratio correction amount AFCav etc. In the example shown in FIG. 19, at the times $t_1$ to $t_2$, the average air-fuel ratio correction amount AFCav is set to the rich set correction amount AFCrich. That is, the target average air-fuel ratio is made a rich air-fuel ratio. Along with this, the output air-fuel ratio AFup of the upstream side air-fuel ratio sensor 40 becomes a rich air-fuel ratio. The unburned HC and CO contained in the exhaust gas flowing into the upstream side exhaust purification catalyst 20 are removed at the upstream side exhaust purification catalyst 20. Along with this, the oxygen storage amount OSA of the upstream side exhaust purification catalyst 20 gradually decreases. On the other hand, by removing the unburned HC and CO at the upstream side exhaust purification catalyst 20, the output air-fuel ratio AFdwn of the downstream side air-fuel ratio sensor 41 becomes substantially the stoichiometric air-fuel ratio.

After that, if the oxygen storage amount OSA of the upstream side exhaust purification catalyst 20 decreases and approaches zero, part of the unburned HC and CO flowing into the upstream side exhaust purification catalyst 20 starts to flow out from the upstream side exhaust purification catalyst 20. For this reason, in the illustrated example, at the time $t_2$, the output air-fuel ratio AFdwn of the downstream side air-fuel ratio sensor 41 reaches the rich judged air-fuel ratio AFrich.

In the present embodiment, if the output air-fuel ratio AFdwn of the downstream side air-fuel ratio sensor 41 becomes a rich judged air-fuel ratio AFrich or less, to make the oxygen storage amount OSA increase, the average air-fuel ratio correction amount AFCav is switched to the lean set correction amount AFClean. Therefore, the target average air-fuel ratio is switched to the lean air-fuel ratio. At this time, the cumulative oxygen excess/deficiency $\Sigma$OED is reset to zero.

If at the time $t_2$ the average air-fuel ratio correction amount AFCav is switched to the lean set correction amount AFClean, the air-fuel ratio of the exhaust gas flowing into the upstream side exhaust purification catalyst 20 changes from a rich air-fuel ratio to a lean air-fuel ratio. Further, along with this, the output air-fuel ratio AFup of the upstream side air-fuel ratio sensor 40 becomes a lean air-fuel ratio. In addition, at the time $t_2$ on, the oxygen storage amount OSA of the upstream side exhaust purification catalyst 20 gradually increases and the cumulative oxygen excess/deficiency $\Sigma$OED also gradually increases. Further, the output air-fuel ratio AFdwn of the downstream side air-fuel ratio sensor 41 converges at the stoichiometric air-fuel ratio.

After that, if the oxygen storage amount OSA of the upstream side exhaust purification catalyst 20 increases, at the time $t_3$, the oxygen storage amount OSA of the upstream side exhaust purification catalyst 20 reaches the switching reference storage amount Cref. At this time, the cumulative oxygen excess/deficiency $\Sigma$OVED reaches the switching reference value OEDref corresponding to the switching reference storage amount Cref. In the present embodiment, if the cumulative oxygen excess/deficiency $\Sigma$OED becomes the switching reference value OEDref or more, to stop the storage of oxygen in the upstream side exhaust purification catalyst 20, the average air-fuel ratio correction amount AFCav is switched to the rich set correction amount AFCrich. Therefore, the target average air-fuel ratio is made a rich air-fuel ratio. Further, at this time, the cumulative oxygen excess/deficiency $\Sigma$OED is reset to zero. After that, in control of the average air-fuel ratio, the control of the times $t_1$ to $t_3$ is repeated.

Note that, the switching reference storage amount Cref is set sufficiently lower than even the maximum storable oxygen amount Cmax of the time when the upstream side exhaust purification catalyst 20 is still unused. For this reason, even if the actual air-fuel ratio of the exhaust gas unintentionally greatly deviates from the target average air-fuel ratio for an instant, the oxygen storage amount OSA will not reach the maximum storable oxygen amount Cmax. Conversely speaking, the switching reference storage amount Cref is made a sufficiently small amount so that even if the above-mentioned unintentional deviation of the air-fuel ratio occurs, the oxygen storage amount OSA will not reach the maximum storable oxygen amount Cmax. For example, the switching reference storage amount Cref is made 3/4 or less of the maximum storable oxygen amount Cmax of the time when the upstream side exhaust purification catalyst 20 is still unused, preferably 1/2 or less, more preferably 1/5 or less.

According to the present embodiment, before oxygen or $NO_X$ flows out from the upstream side exhaust purification catalyst 20, the target average air-fuel ratio is switched from a lean air-fuel ratio to a rich air-fuel ratio. For this reason, the amount of discharge of $NO_X$ from the upstream side exhaust purification catalyst 20 can be constantly suppressed. That is, so long as performing the above-mentioned control, basically, the $NO_X$ discharge amount from the upstream side exhaust purification catalyst 20 can be made substantially zero. Further, the time period of cumulative addition when calculating the cumulative oxygen excess/deficiency $\Sigma$OED is short, so there is greater resistance to calculation error compared with cumulative addition over a long time period. For this reason, calculation error of the cumulative oxygen excess/deficiency $\Sigma$OED can be kept from causing $NO_X$ to end up being discharged.

Note that, in the present embodiment, both in the time period where the average air-fuel ratio correction amount AFCav is set to a rich set correction amount AFCrich (for example, times $t_1$ to $t_2$) and in the time period where a lean set correction amount AFClean is set to (for example, times $t_2$ to $t_3$), inter-cylinder air-fuel ratio control is performed. In particular, in the example shown in FIG. 19, at the rich side cylinders, the air-fuel ratio correction amount AFC is set to the value of the average air-fuel ratio correction amount AFCav minus the amount of change $\alpha$. On the other hand, at the lean side cylinders, the air-fuel ratio correction amount AFC is set to the value of the average air-fuel ratio correction amount AFCav plus an amount of change $\alpha$. However, in the same way as the modification of the above-mentioned first embodiment, the inter-cylinder air-fuel ratio control can also be performed in the time period where the average air-fuel ratio correction amount AFCav is set to the rich set correction amount.

<Explanation and Flow Chart of Specific Control>

Next, referring to FIG. 20, a control device of an exhaust purification system of the above embodiment will be explained. FIG. 20 is a functional block diagram similar to FIG. 8. An oxygen excess/deficiency calculating part A4 is added to the functional block diagram shown in FIG. 8.

The oxygen excess/deficiency calculating part A4 uses the fuel injection amount Qi calculated at the fuel injection calculating part A3 and the output air-fuel ratio AFup of the upstream side air-fuel ratio sensor 40 as the basis to calculate the cumulative oxygen excess/deficiency $\Sigma$OED. The oxygen excess/deficiency calculating part A4, for example, uses the above equation (2) to multiply the difference between the output air-fuel ratio of the upstream side air-fuel ratio sensor 40 and the air-fuel ratio of the control center with the fuel injection amount Qi and cumulatively adds the found values to calculate the cumulative oxygen excess/deficiency $\Sigma$OED. Further, in the present embodiment, at the air-fuel ratio correction calculating part A5, in addition to the output air-fuel ratio AFdwn of the downstream side air-fuel ratio sensor 41, the cumulative oxygen excess/deficiency $\Sigma$OED calculated by the oxygen excess/deficiency calculating part A4 is used as the basis to calculate the average air-fuel ratio correction amount AFCav and air-fuel ratio correction amounts AFC of the different cylinders.

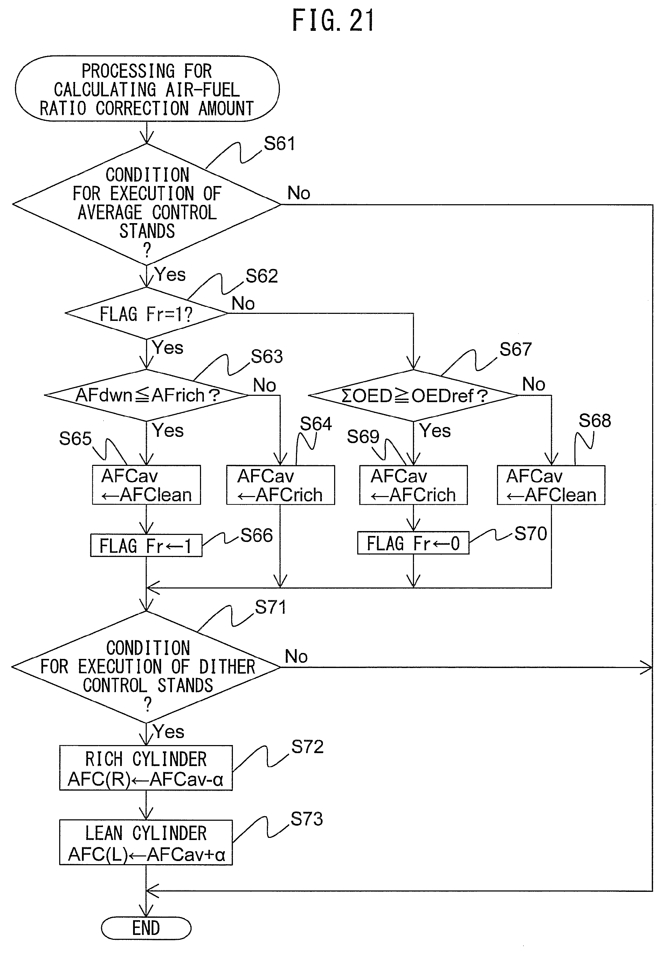

FIG. 21 is a flow chart showing a control routine for processing for calculating an air-fuel ratio correction amount in the second embodiment. The illustrated control routine is performed by interruption every certain time interval. In FIG. 21, steps S61 to S66 and steps S68 to S73 are similar to steps S11 to S16 and steps S18 to S23 of FIG. 9, so explanations will be omitted.

In the control routine shown in FIG. 21, when at step S62 it is judged that the rich flag Fr is not "1", the routine proceeds to step S67. At step S67, it is judged whether the cumulative oxygen excess/deficiency $\Sigma$OED from when the average air-fuel ratio correction amount AFCav is switched is at least equal to the switching reference value OEDref. If the cumulative oxygen excess/deficiency $\Sigma$OED is smaller than the switching reference value OEDref, the routine proceeds to step S68. On the other hand, if it is judged that the cumulative oxygen excess/deficiency $\Sigma$OED is at least equal to the switching reference value OEDref, the routine proceeds to step S69.

Although this invention has been described by way of the specific embodiments, this invention is not limited to the above embodiments. It is possible for a person skilled in the art to modify or alter the above embodiments in various manners within the technical scope of the present invention.

**Claims**

1. An internal combustion engine which has a plurality of cylinders comprising:

    port fuel injectors (12) injecting fuel into an intake passage (7) communicating with the cylinders;
    cylinder fuel injectors (11) injecting fuel into combustion chambers (5) of the cylinders;
    an exhaust purification catalyst (20) arranged at an engine exhaust passage (9) and able to store oxygen;
    a downstream side air-fuel ratio sensor (41) arranged at a downstream side of the exhaust purification catalyst (20) in the direction of flow of exhaust; and
    a control device (31) configured to control combustion air-fuel ratios when fuel is burned in the cylinders and to control a ratio of feed of fuel from both of the port fuel injectors (12) and the cylinder fuel injectors (11), wherein the control device (31) is configured to perform
    average air-fuel ratio control where it alternately controls an average value of combustion air-fuel ratios of all cylinders, defined as an average air-fuel ratio, to a rich air-fuel ratio richer than a stoichiometric air-fuel ratio and a lean air-fuel ratio leaner than a stoichiometric air-fuel ratio and
    inter-cylinder air-fuel ratio control where it controls the combustion air-fuel ratios of the cylinders so that even when due to the average air-fuel ratio control, the average air-fuel ratio is controlled to a lean air-fuel ratio, in at least one cylinder among the plurality of cylinders, the combustion air-fuel ratio becomes a rich air-fuel ratio and in at least one cylinder, the combustion air-fuel ratio becomes leaner than the average air-fuel ratio, and wherein
    the control device (31) is further configured to:

    control the average air-fuel in the average air-fuel ratio control so that a lean shift amount of a difference between the average air-fuel ratio when controlling the average air-fuel ratio to a lean air-fuel ratio and a stoichiometric air-fuel ratio becomes smaller than a rich shift amount of a difference of the average air-fuel ratio when controlling the average air-fuel ratio to a rich air-fuel ratio and a stoichiometric air-fuel ratio; and
    control the feed ratio so that an amount of fuel feed from the port fuel injector (12) becomes greater than an amount of fuel feed from the cylinder fuel injector (11) for a cylinder where the combustion air-fuel ratio is made leaner than the average air-fuel ratio when the inter-cylinder air-fuel ratio control is being performed.

2. The internal combustion engine according to claim 1 wherein the control device (31) is further configured to control the feed ratio when the inter-cylinder air-fuel ratio control is being performed so that an amount of fuel feed from a cylinder fuel injector (11) becomes greater than an amount of fuel feed from a port fuel injector (12) for a cylinder where the combustion air-fuel ratio is made richer than the average air-fuel ratio.

3. The internal combustion engine according to claim 1 wherein the control device (31) is further configured to control the feed ratio when the inter-cylinder air-fuel ratio control is being performed so that an amount of fuel feed from a port fuel injector (12) becomes greater than an amount of fuel feed from a cylinder fuel injector (11) for a cylinder where the combustion air-fuel ratio is made richer than the average air-fuel ratio.

4. The internal combustion engine according to any one of claims 1 to 3 wherein the control device (31) is further configured to control the feed ratio when the inter-cylinder air-fuel ratio control is being performed so that a ratio of amount of fuel feed from a port fuel injector (12) to a total amount of injection at a cylinder where the combustion air-fuel ratio is made leaner than the average air-fuel ratio becomes that ratio or more at a cylinder where the combustion air-fuel ratio is made richer than the average air-fuel ratio.

5. The internal combustion engine according to any one of claims 1 to 4 wherein the control device (31) is further configured to control the feed ratio when the inter-cylinder air-fuel ratio control is being performed so as to not to feed fuel from a cylinder fuel injector (11) but to feed fuel from only a port fuel injector (12) for a cylinder where the combustion air-fuel ratio is made leaner than the average air-fuel ratio.

6. The internal combustion engine according to any one of claims 1 to 5 wherein the control device (31) is further configured to control the feed ratio so that the higher the engine load and the higher the engine speed, the greater the amount of feed of fuel from a cylinder fuel injector (11) with respect to the total amount of injection of each cylinder.

7. A method of controlling an internal combustion engine which has a plurality of cylinders, the internal combustion engine comprising:

   port fuel injectors (12) injecting fuel into an intake passage (7) communicating with the cylinders;
   cylinder fuel injectors (11) injecting fuel into combustion chambers (5) of the cylinders;
   an exhaust purification catalyst (20) arranged at an engine exhaust passage (9) and able to store oxygen; wherein combustion air-fuel ratios are controlled when fuel is burned in the cylinders, and a ratio of feed of fuel from both of the port fuel injectors (12) and the cylinder fuel injectors (11) is controlled,

   the method comprising the steps of:

   performing average air-fuel ratio control where it is alternately controlled an average value of combustion air-fuel ratios of all cylinders, defined as an average air-fuel ratio, to a rich air-fuel ratio richer than a stoichiometric air-fuel ratio and a lean air-fuel ratio leaner than a stoichiometric air-fuel ratio;
   performing inter-cylinder air-fuel ratio control where it is controlled the combustion air-fuel ratios of the cylinders so that even when due to the average air-fuel ratio control, the average air-fuel ratio is controlled to a lean air-fuel ratio, in at least one cylinder among the plurality of cylinders, the combustion air-fuel ratio becomes a rich air-fuel ratio and in at least one cylinder, the combustion air-fuel ratio becomes leaner than the average air-fuel ratio;
   controlling the average air-fuel in the average air-fuel ratio control so that a lean shift amount of a difference between the average air-fuel ratio when controlling the average air-fuel ratio to a lean air-fuel ratio and a stoichiometric air-fuel ratio becomes smaller than a rich shift amount of a difference of the average air-fuel ratio when controlling the average air-fuel ratio to a rich air-fuel ratio and a stoichiometric air-fuel ratio; and
   controlling the feed ratio so that an amount of fuel feed from the port fuel injector (12) becomes greater than an amount of fuel feed from the cylinder fuel injector (11) for a cylinder where the combustion air-fuel ratio is made leaner than the average air-fuel ratio when the inter-cylinder air-fuel ratio control is being performed.

8. The method according to claim 7 further comprising the steps of: controlling the feed ratio when the inter-cylinder air-fuel ratio control is being performed so that an amount of fuel feed from a cylinder fuel injector (11) becomes greater than an amount of fuel feed from a port fuel injector (12) for a cylinder where the combustion air-fuel ratio is made richer than the average air-fuel ratio.

9. The method according to claim 7 further comprising the steps of: controlling the feed ratio when the inter-cylinder air-fuel ratio control is being performed so that an amount of fuel feed from a port fuel injector (12) becomes greater than an amount of fuel feed from a cylinder fuel injector (11) for a cylinder where the combustion air-fuel ratio is made richer than the average air-fuel ratio.

10. The method according to any one of claims 7 to 9 further comprising the steps of: controlling the feed ratio when the inter-cylinder air-fuel ratio control is being performed so that a ratio of amount of fuel feed from a port fuel injector (12) to a total amount of injection at a cylinder where the combustion air-fuel ratio is made leaner than the average air-fuel ratio becomes that ratio or more at a cylinder where the combustion air-fuel ratio is made richer than the average air-fuel ratio.

11. The method according to any one of claims 7 to 10 further comprising the steps of: controlling the feed ratio when the inter-cylinder air-fuel ratio control is being performed so as to not to feed fuel from a cylinder fuel injector (11) but to feed fuel from only a port fuel injector (12) for a cylinder where the combustion air-fuel ratio is made leaner than the average air-fuel ratio.

12. The method according to any one of claims 7 to 11 further comprising the steps of: controlling the feed ratio so that the higher the engine load and the higher the engine speed, the greater the amount of feed of fuel from a cylinder fuel injector (11) with respect to the total amount of injection of each cylinder.

# FIG. 1

LOAD SENSOR

CRANK ANGLE SENSOR

A/D

A/D

A/D

A/D

INPUT PORT

OUTPUT PORT

RAM

ROM

CPU

# FIG. 2

# FIG. 3

# FIG. 4

# FIG. 5

## FIG. 6A

## FIG. 6B

## FIG. 6C

# FIG. 7A

# FIG. 7B

FIG. 8

# FIG. 9

```
        ┌─────────────────────┐
        │   PROCESSING FOR     │
        │ CALCULATING AIR-FUEL │
        │ RATIO CORRECTION     │
        │      AMOUNT          │
        └─────────────────────┘
                  │
                  ▼              S11
         ◇─────────────────────◇
        ╱   CONDITION            ╲        No
       ◇  FOR EXECUTION OF        ◇──────────────────────┐
        ╲  AVERAGE CONTROL       ╱                        │
         ╲    STANDS            ╱                         │
          ◇        ?          ◇                           │
                  │ Yes          S12                      │
                  ▼                                       │
         ◇─────────────────◇    No                        │
        ╱                   ╲──────────────────┐          │
        ╲  FLAG Fr=1?        ╱                 │          │
         ◇─────────────────◇                   │          │
                  │ Yes          S13            │          │
                  ▼                             │          │
     ◇───────────────────◇   No                │  S17     │
    ╱                     ╲───────┐    ◇────────────────◇    No
    ╲  AFdwn≦AFrich?       ╱       │   ╱                  ╲──────────┐
     ◇───────────────────◇        │   ╲  AFdwn≧AFlean?    ╱          │
             │ Yes                │    ◇────────────────◇           │
             │                    │           │ Yes                 │
   S15       ▼                    ▼    S19     ▼              S18     ▼
  ┌──────────────┐      ┌──────────────┐  ┌──────────────┐   ┌──────────────┐
  │   AFCav      │      │   AFCav      │  │   AFCav      │   │   AFCav      │
  │ ←AFClean     │      │ ←AFCrich     │  │ ←AFCrich     │   │ ←AFClean     │
  └──────────────┘      └──────────────┘  └──────────────┘   └──────────────┘
          │                     │ S16             │ S20             │
          ▼                     │                 ▼                 │
  ┌──────────────┐              │          ┌──────────────┐         │
  │ FLAG Fr←1    │──S16         │          │ FLAG Fr←0    │──S20    │
  └──────────────┘              │          └──────────────┘         │
          │                     ▼ S14             │                 │
          │                                       │                 │
          ▼─────────────────────────────────────────────────────────
                  │
                  ▼              S21
         ◇─────────────────────◇
        ╱    CONDITION           ╲        No
       ◇  FOR EXECUTION OF DITHER ◇────────────────────────┐
        ╲  CONTROL STANDS        ╱                          │
         ◇        ?             ◇                           │
                  │ Yes                                     │
                  ▼                                         │
  ┌─────────────────────────┐     S22                       │
  │  RICH CYLINDER          │                               │
  │  AFC(R)←AFCav-α          │                               │
  └─────────────────────────┘                               │
                  │                                         │
                  ▼                                         │
  ┌─────────────────────────┐     S23                       │
  │  LEAN CYLINDER          │                               │
  │  AFC(L)←AFCav+α          │                               │
  └─────────────────────────┘                               │
                  │◄────────────────────────────────────────
                  ▼
            ┌───────────┐
            │    END    │
            └───────────┘
```

FIG. 10

# FIG. 11

PFI RATIO

# FIG. 12

PFI RATIO

# FIG. 13

PFI RATIO

# FIG. 14

FUEL FEED TIMING

## FIG. 15

# FIG. 16

PROCESSING FOR SETTING PFI RATIOS

S31

CONDITION FOR EXECUTION OF DITHER CONTROL STANDS ? — No

Yes

S33
CALCULATE PFI RATIOS BASED ON MAP OF FIG. 13 FOR LEAN CYLINDERS

S32
CALCULATE PFI RATIOS BASED ON MAP OF FIG. 12 FOR ALL CYLINDERS

S34
CALCULATE PFI RATIOS BASED ON MAP OF FIG. 14 FOR RICH CYLINDERS

END

# FIG. 17

## FIG. 18

PROCESSING FOR SETTING PFI RATIOS

S41

CONDITION
FOR EXECUTION OF
DITHER CONTROL
STANDS
? — No

Yes S43

PFI RATIOS OF ALL CYLINDERS → 100%

S42

CALCULATE PFI RATIOS
BASED ON MAP OF FIG. 12
FOR ALL CYLINDERS

END

# FIG. 19

# FIG. 20

$\Longrightarrow$ :FLOW OF EXHAUST GAS

$\longrightarrow$ :FLOW OF SIGNAL

EP 3 088 712 A2

# FIG. 21

```
        ( PROCESSING FOR
          CALCULATING AIR-FUEL
          RATIO CORRECTION AMOUNT )
                    |
                    v                    S61
              < CONDITION
                FOR EXECUTION OF         No
                AVERAGE CONTROL  >------------------+
                STANDS                              |
                ? >                                 |
                    | Yes        S62                |
                    v                               |
              < FLAG Fr=1? >  No                    |
                    |         ----------+           |
                    | Yes               |           |
                    v          S63      v      S67  |
         < AFdwn≦AFrich? >  No    < ΣOED≧OEDref? >  No
                |          ----+       |          ----+
        S65     | Yes     S64  |  S69  | Yes     S68  |
                v         v    v       v         v    v
           AFCav      AFCav      AFCav       AFCav
           ←AFClean   ←AFCrich   ←AFCrich    ←AFClean
                |                   |
                v     S66           v      S70
           FLAG Fr←1           FLAG Fr←0
                |         |         |           |
                v         v         v           v
                +---------+---------+-----------+
                    |
                    v            S71
              < CONDITION
                FOR EXECUTION OF DITHER    No
                CONTROL STANDS         >------------------+
                ? >                                       |
                    | Yes                                 |
                    v                                     |
           RICH CYLINDER              S72                 |
           AFC(R)←AFCav-α                                 |
                    |                                     |
                    v                                     |
           LEAN CYLINDER              S73                 |
           AFC(L)←AFCav+α                                 |
                    |                                     |
                    v<------------------------------------+
                ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007332867 A